# EUROPEAN PATENT SPECIFICATION

(11) **EP 1 878 648 B1**
(45) Date of publication and mention of the grant of the patent: **18.05.2011**
(21) Application number: 07252738.5
(22) Date of filing: 09.07.2007
(51) Int. Cl.: B62K 25/08, B62K 25/10, F16F 9/32

(54) **Vehicle with a damper position sensor**
Fahrzeug mit einem Positionssensor für einen Dämpfer
Véhicule avec un senseur de position de l'amortisseur

(30) Priority: 11.07.2006 JP 2006190498; 14.05.2007 JP 2007128643
(43) Date of publication of application: 16.01.2008
(73) Proprietor: Yamaha Hatsudoki Kabushiki Kaisha, Shizuoka-ken 438-8501 (JP)
(72) Inventor: Kawamura, Tsunehisa, Iwata-shi Shizuoka-ken 438-8501 (JP)
(74) Representative: Lamb, Martin John Carstairs

(56) References cited:
- EP-A- 1 669 631
- WO-A-01/11254
- DE-A1- 3 500 601
- US-B1- 6 305 673

## Description

### FIELD OF THE INVENTION

The present invention relates to a vehicle, and in particular, to a vehicle provided with a suspension system.

### BACKGROUND TO THE INVENTION

A vehicle provided with a suspension system such as a front fork and a rear suspension is known for example from JP 6-263078. JP 6-263078 discloses a vehicle including a pair of left and right front forks disposed between a front wheel and a vehicle body and each filled with oil, a stroke sensor part provided in one front fork to detect the stroke amount of the front fork, and a damper mechanism provided to the other front fork to damp the force of expansion or contraction of the front wheel and the vehicle body.

As mentioned above, the vehicle disclosed in JP 6-263078 above has a structure with preconditions that the damper mechanism is provided with one of the pair of front forks and that the stroke sensor part is provided with the other front fork. Accordingly, it is necessary to adjust the damping force of the front forks only with the damper mechanism of one front fork. Therefore, it is difficult to provide a wide adjustment range of the damping force of the front fork.

DE 3500601 describes a hydropneumatic spring cylinder that is provided with a sealed working piston, which separates two working chambers and is fixed to a piston rod. In this arrangement, the working chambers of the working cylinder are each connected to a separate accumulator. Damping valves are provided between the hydraulic connections between the accumulators and the working chambers. Depending on the design type, the accumulators may be built in or externally connected. Changing of the spring load deflection characteristic and damping force can be produced by way of an externally actuable valve either in the working piston or in a bypass running parallel to the two working chambers of the spring cylinder. By adjusting the spring load-deflection characteristic and the damping, the tilt, roll and/or pitch movements of the vehicle body can be reduced. US 6,305,673 discloses a vehicle according to the preamble of claim 1.

In particular US 6,305,673 describes an adjustable liquid spring device, which comprises a generally vertically oriented single rod end type liquid spring. The spring is connected by an upper end mounting bracket to a vehicle frame and by a lower end mounting bracket to a support structure of a wheel, and operates to damp forces at its associated wheel location. The spring includes an elongated, vertically oriented tubular housing having an upper end and a lower end. An upper annular gland member is threaded into the upper housing end and a lower annular gland member is welded or threaded to the lower housing end. The gland members define within the housing interior a chamber which contains a compressible liquid.

An elongated hollow cylindrical rod structure is coaxially secured to an annular piston at a lower end and coaxially secured to the upper mounting bracket at an upper end. A metallic cylindrical rod position sensor is fixedly attached to the lower gland member. An upper end of the metallic cylindrical rod extends into the hollow interior of the elongated hollow cylindrical rod and therefore will create an electrical capacitance proportional to the amount of extension of the position sensor into the rod structure.

WO01/11254 describes an arrangement for a piston and cylinder device of the type that is part of a shock absorber. The arrangement comprises a cylinder unit limiting an inner space in which a medium in the form of a gas or a liquid is intended to be placed, a forwardly and backwardly moveable piston unit placed such that it can slide within the space and divide the inner space into a first chamber and a second chamber. A piston rod connected to the piston, protrudes from an opening arranged in the cylinder. An inlet and outlet are arranged with the respective chambers of the cylinder unit for the addition to and removal of medium from the said chambers together with devices that act together in order to determine the relative position of the piston within the cylinder unit, an active first part of which is attached to the cylinder unit and arranged to stretch into a recess that is arranged in the piston unit. In order to achieve a piston and cylinder device that makes it possible both for the medium to flow into and out from the chambers and that allows guidance and control of the motion of the piston device, the inlet/outlet of the chamber through which the piston rod stretches comprises a tube-shaped element whereby the said tube-shaped element also forms a first part attached to the cylinder unit of the position sensitive devices.

EP 1 669 631 describes a damper having a damper piston that is movably accommodated in a damper housing. A position measuring sensor for measuring the movement and/or position of the piston relative to the housing is arranged within the housing. The sensor has a position encoder connected with the piston and a displacement transducer attached to the housing. The housing forms a cylinder in which the piston is longitudinally movable.

The present invention has been made in view of solving the foregoing problem, and therefore has a object to provide a vehicle having a wide adjustment range of damping force with a detection member disposed in a suspension system.

### SUMMARY OF THE INVENTION

Various aspects of the present invention are defined in the independent claim 1. Some preferred features are defined in the dependent claims.

Described herein is a vehicle comprising:
a wheel;
a vehicle body;
a first suspension system provided between the wheel and the vehicle body;
a first damping mechanism disposed in the first suspension system to damp a force in at least either one of an expanding direction and a contracting direction when the wheel and the vehicle body move relatively; and
a detection member disposed in the first suspension system to detect a state of expansion or contraction when the wheel and the vehicle body move relatively,
wherein the detection member includes a contact part that is in contact with an inner end surface of the first suspension system with its end pressed thereagainst.

The first suspension system includes a first cylinder part coupled to either one of the wheel and the vehicle body.

The first suspension system comprises a bracket provided to cover an opening on one side of the first cylinder part.

The detection member may include a sensor part, a main body part connected to the sensor part, and a flange part coupled to the main body part.

The bracket may comprise an insertion hole into which the flange part of the detection member may be inserted, wherein the insertion hole has a bottom for supporting a lower surface of the flange part.

The bracket may comprise a positioning hole into which the main body part of the detection member may be inserted.

The vehicle may further comprise a sealing member disposed between an inner surface of the first suspension system and the detection member.

The sealing member may be disposed between the lower surface of the flange part of the detecting member and the bottom of the insertion hole of the bracket.

The sealing member may be disposed between an outer circumferential surface of the main body part of the detection member and an inner circumferential surface of the positioning hole of the bracket.

The vehicle may further comprise:
a first pin hole formed within the detection member;
a second pin hole formed within the bracket; and
a pin adapted to be fitted into the first and second pin holes to prevent the detection member from rotating relative to the first suspension system.

The outer circumferential surface of the main body part of the detection member may be formed with a recess in which the sealing member is disposed.

The first suspension system may be constructed such that a first pressure inside the first suspension system with respect to the sealing member is larger than a second pressure outside the first suspension system with respect to the sealing member. Also, the detection member may be constructed so as to be fixed to the bracket by the main body part of the detection member being pressed against a part of the bracket by the first pressure larger than the second pressure.

The first suspension system may further include a second cylinder part filled with high pressure gas and a free piston part disposed in the second cylinder, and the first suspension system may be constructed such that the first pressure inside the first suspension system is made larger than the second pressure outside the first suspension system by the free piston part being pressed by the high pressure gas and bringing oil charged in the first suspension system to a high pressure state.

The contact part may be formed in at least one of the main body part and the flange part.

The detection member may be fixed to the bracket by interposing the flange part between the bottom of the insertion hole of the bracket and one end of the first cylinder part.

The insertion hole of the bracket may include a first screw part formed on an inner circumferential surface and the first cylinder part may include a second screw part formed on an outer circumferential surface of the one end of the first cylinder part. The one end of the first cylinder part may be in contact with an upper surface of the flange part of the detection member with the second screw part of the first cylinder part screwed into the first screw part of the insertion hole of the bracket.

The first damping mechanism may be provided in the first cylinder part, and constructed so as to damp a force when the wheel and the vehicle body move relatively in the expanding direction.

The detection member may include a sensor part, the first damping mechanism may include a sensor insertion hole into which the sensor part of the detection member is inserted, and an end of the sensor insertion hole on a side where the sensor part is inserted may have a tapering shape having a larger opening area toward outside.

The vehicle may further comprise a second suspension system constituting one front fork, the wheel may include a front wheel and the first suspension system may include an other front fork provided between the front wheel and the vehicle body. The other front fork may be provided with both of the first damping mechanism and the detection member, and the one front fork may be provided with a second damping mechanism.

The wheel may include a rear wheel and the first suspension system may include a rear suspension disposed between the rear wheel and the vehicle body and provided with the first damping mechanism and the detection member.

In the vehicle described herein, as mentioned above, the first suspension system including the first damping mechanism for damping at least either one of forces in an expanding direction and a contracting direction when the wheel and the vehicle body move relatively and the detection member disposed in the first suspension system and including a sensor part, a main body part, and a flange part provided to the main body part to detect a state of expansion or contraction when the wheel and the vehicle body move relatively are provided. As a result, not only the detection member for detecting the state of expansion or contraction but also the first damping mechanism is built in the first suspension system. Consequently, it is possible to cause the first suspension system to have both a function of detecting the state of expansion or contraction and a damping function. As a result, when a second suspension system having only the damping mechanism is paired with the first suspension system, it is possible to damp at least either one of forces in the expanding direction and the contracting direction when the wheel and the vehicle body move relatively not only by the damping mechanism of the second suspension system but also by the first damping mechanism of the first suspension system. As a result, ' it is possible to provide a wide adjustment range of damping force when the detection member is disposed in the first suspension system. In addition, the contact part of the detection member is pushed to the inner end surface of the first suspension system. Consequently, it is possible to easily seal the space between the first suspension system and the detection member, and to prevent oil in the first suspension system from flowing out.

The vehicle described herein further includes a sealing member disposed between an inner surface of the first suspension system and the detection member. According to this construction, it is possible to easily seal the space between the first suspension system and the detection member, and to more reliably prevent the oil in the first suspension system from flowing out.

In the vehicle including the sealing member, preferably, the detection member includes a sensor part, a main body part connected to the sensor part, and a flange part provided to the main body part, the first suspension system includes a first cylinder part provided to either one of the wheel and the vehicle body, and a bracket provided to cover an opening on one side of the first cylinder part and having an insertion hole into which the flange part of the detection member is inserted, the insertion hole has a bottom for supporting a lower surface of the flange part, and the sealing member is disposed between the lower surface of the flange part of the detection member and the bottom of the bracket. According to this construction, the sealing member can seal the space between the surface of the flange part of the detection member and the bottom of the bracket. Consequently, it is possible to prevent oil in the first cylinder part from flowing out of the first cylinder part. In addition, it is possible to easily mount the detection member to the first suspension system by providing the detection member with the sensor part, the main body part connected to the sensor part, and the flange part provided to the main body part.

In this case, preferably, the vehicle further includes a pin for preventing the detection member from rotating relative to the first suspension system, the first suspension system includes a first cylinder part provided to either one of the wheel and the vehicle body, and a bracket provided to cover an opening on one side of the first cylinder part and having a positioning hole into which the main body part of the detection member is inserted, the detection member is formed with a first pin hole, the bracket is formed with a second pin hole, and the pin is fitted into the first pin hole of the detection member and the second pin hole of the bracket. According to this construction, the pin can easily prevent the detection member from rotating relative to the first suspension system.

In the vehicle including the sealing member, preferably, the detection member includes a sensor part, a main body part connected to the sensor part, and a flange part provided to the main body part, the first suspension system includes a first cylinder part provided to either one of the wheel and the vehicle body, and a bracket provided to cover an opening on one side of the first cylinder part and having a positioning hole into which the main body part of the detection member is inserted, and the sealing member is disposed between an outer circumferential surface of the main body part of the detection member and an inner circumferential surface of the positioning hole of the bracket. According to this construction, the sealing member can seal the space between the outer circumferential surface of the main body part of the detection member and the inner circumferential surface of the positioning hole of the bracket. Consequently, it is possible to prevent oil in the first cylinder part from flowing out of the first cylinder part.

In the vehicle in which the sealing member is disposed between the outer circumferential surface of the main body part of the detection member and the inner circumferential surface of the positioning hole of the bracket, preferably, the outer circumferential surface of the main body part of the detection member is formed with a recess in which the sealing member is disposed. According to this construction, it is possible to prevent the sealing member from moving on the outer circumferential surface of the main body part of the detection member. As a result, it is possible to prevent the sealing member from deviating from the main body part of the detection member.

In the vehicle in which the sealing member is disposed between the outer circumferential surface of the main body part of the detection member and the inner circumferential surface of the positioning hole of the bracket, preferably, the first suspension system is constructed such that a first pressure inside the first suspension system with respect to the sealing member is larger than a second pressure outside the first suspension system with respect to the sealing member, and the detection member is constructed so as to be fixed to the bracket by the main body part of the detection member being pressed against a certain part of the bracket by the first pressure larger than the second pressure. According to this construction, when the bracket is assembled to the detection member, assembly work such as screwing is not necessary to fix the detection member to the bracket. Consequently, the assembly workability can be improved.

In this case, preferably, the first suspension system further includes a second cylinder part filled with high pressure gas and a free piston part disposed in the second cylinder, and the first suspension system is constructed such that the first pressure inside the first suspension system is made larger than the second pressure outside the first suspension system by the free piston part being pressed by the high pressure gas and bringing oil charged in the first suspension system to a high pressure state. According to this construction, it is possible to prevent the fist pressure inside the first suspension system from becoming negative relative to the second pressure outside the first suspension when the first suspension system moves relatively in the expanding direction and the first pressure in the first suspension system is decreased. As a result, it is possible to prevent the detection member from falling off the bracket.

In the vehicle described herein, preferably, the detection member includes a sensor part, a main body part connected to the sensor part, and a flange part provided to the main body part, and the contact part is formed in at least either one of the main body part and the flange part. According to this construction, either one of the main body part and the flange part having a larger surface area in comparison with the sensor part is pushed to the inner end surface of the first suspension system. Consequently, it is possible to more reliably mount the detection member to the inside of the first suspension system. As a result, it is possible to more reliably prevent oil in the first suspension system from flowing out.

In the vehicle in which the contact part is formed in the flange part, preferably, the first suspension system includes a first cylinder part provided to either one of the wheel and the vehicle body, and a bracket provided to cover an opening on one side of the first cylinder part and having a positioning hole into which the main body part of the detection member is inserted, the insertion hole has a bottom for supporting a lower surface of the flange part, and the detection member is fixed to the bracket by the flange part constituting the contact part being interposed between the bottom of the insertion hole of the bracket and one end of the first cylinder part. According to this construction, it is possible to prevent the flange part of the detection member from shaking relative to the bracket. Consequently, it is possible to easily mount the detection member to the bracket.

In this case, preferably, the insertion hole of the bracket includes a first screw part formed on an inner circumferential surface, the first cylinder part includes a second screw part formed on an outer circumferential surface of the one end of the first cylinder part, and the one end of the first cylinder part is in contact with an upper surface of the flange part of the detection member with the second screw part of the first cylinder part screwed into the first screw part of the insertion hole of the bracket. According to this construction, it is possible to firmly hold the flange part of the detection member between the bottom of the insertion hole of the bracket and one end of the first cylinder part by the second screw part of the first cylinder part and the first screw part of the insertion hole of the bracket. Consequently, it is possible to reliably fix the detection member.

In the vehicle described herein, preferably, the first suspension system includes a first cylinder part provided to either one of the wheel and the vehicle body, and the first damping mechanism is provided in the first cylinder part, and constructed so as to damp a force when the wheel and the vehicle body move relatively in the expanding direction. According to this construction, it is possible to obtain a vehicle capable of highly damping a force in the expanding direction that is normally larger than a force in the contracting direction when the wheel and the vehicle body move relatively.

In the vehicle described herein, preferably, the detection member includes a sensor part, the first damping mechanism includes a sensor insertion hole into which the sensor part of the detection member is inserted, and an end of the sensor insertion hole on a side where the sensor part is inserted has a tapering shape having a larger opening area toward outside. According to this construction, the sensor part of the detection member can be easily inserted into the sensor insertion hole during assembly. Consequently, the assembly workability can be improved.

The vehicle described herein further includes a second suspension system constituting one front fork, the wheel includes a front wheel, the first suspension system includes the other front fork provided between the front wheel and the vehicle body, the other front fork is provided with both of the first damping mechanism and the detection member, and the one front fork is provided with a second damping mechanism. According to this construction, as the construction of the first suspension system of the vehicle is applied to the other front fork as mentioned above, it is possible to obtain a front fork capable of preventing the load on the second damping mechanism of one front fork from becoming large also in the case where the detection member is provided to the other front fork.

In the vehicle described herein, preferably, the wheel includes a rear wheel, and the first suspension system includes a rear suspension disposed between the rear wheel and the vehicle body and provided with the first damping mechanism and the detection member. By applying the construction of the first suspension system of the vehicle to the rear suspension as mentioned above, it is possible to obtain a rear suspension capable of preventing the load on the damping mechanism provided to a part other than the first damping mechanism from

becoming large also in the case where the detection member is provided to the first suspension system.

### BRIEF DESCRIPTION OF THE DRAWINGS

This and other aspects of the present invention will now be described, by way of example only, with reference to the accompanying drawings, in which:
FIG. 1 is a side view illustrating the entire structure of a motorcycle according to an embodiment of the present invention;
FIG. 2 is a side view illustrating the structure of the front part of the motorcycle shown in FIG. 1;
FIG. 3 is a cross-sectional view of a right front fork of the motorcycle shown in FIG. 1;
FIG. 4 is an enlarged cross-sectional view of a portion of the front fork shown in FIG. 3;
FIG. 5 is an enlarged cross-sectional view of an alternative portion of the front fork shown in FIG. 3;
FIG. 6 is a cross-sectional view taken along the line 200-200 in FIG. 4;
FIG. 7 is a cross-sectional of a rear suspension of the motorcycle shown in FIG. 1;
FIGs. 8 to 12 show steps in an assembly process of the right front fork shown in FIG. 3;
FIGs. 13 to 17 show steps in an assembly process of the rear suspension shown in FIG. 7;
FIG. 18 is a cross-sectional view of a right front fork of a motorcycle according to an alternative embodiment of the present invention;

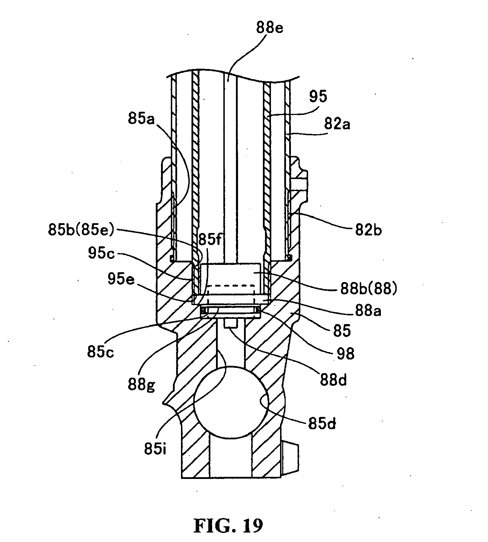

FIG. 19 is an enlarged cross-sectional view of part of the right front fork shown in FIG. 18;
FIGs. 20 to 22 show steps in an assembly process of the right front fork shown in FIG. 19;
FIG. 23 is a cross-sectional view illustrating the state in which a flange part of a detection device is inserted into an insertion hole of an axle bracket of the right front fork of the motorcycle according to a modified example of the first embodiment of the present invention; and
FIG. 24 is a cross-sectional view illustrating the structure of the vicinity of a main body part of a detection device of the motorcycle according to a modified example of the second embodiment of the present invention.

### DETAILED DESCRIPTION OF THE DRAWINGS

### First Embodiment

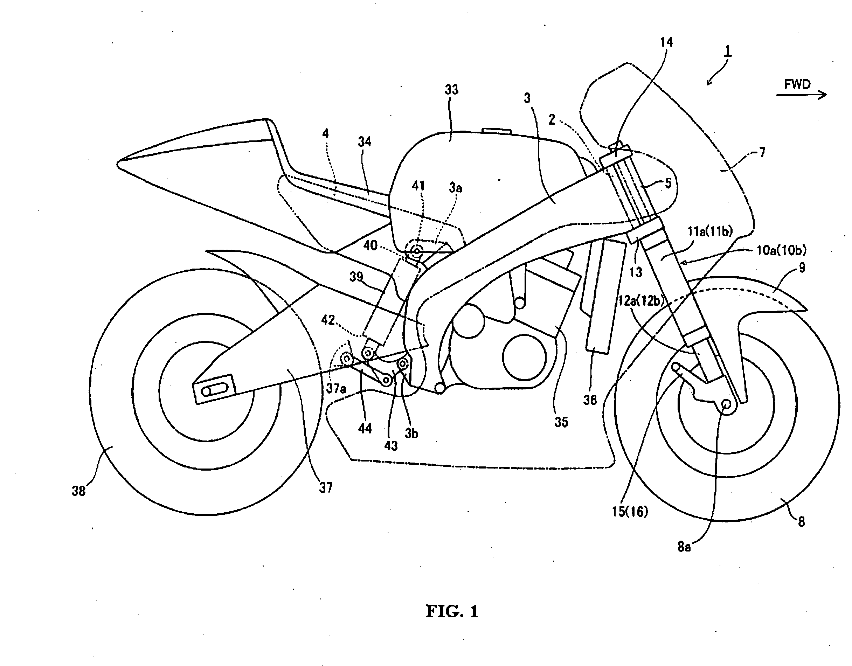

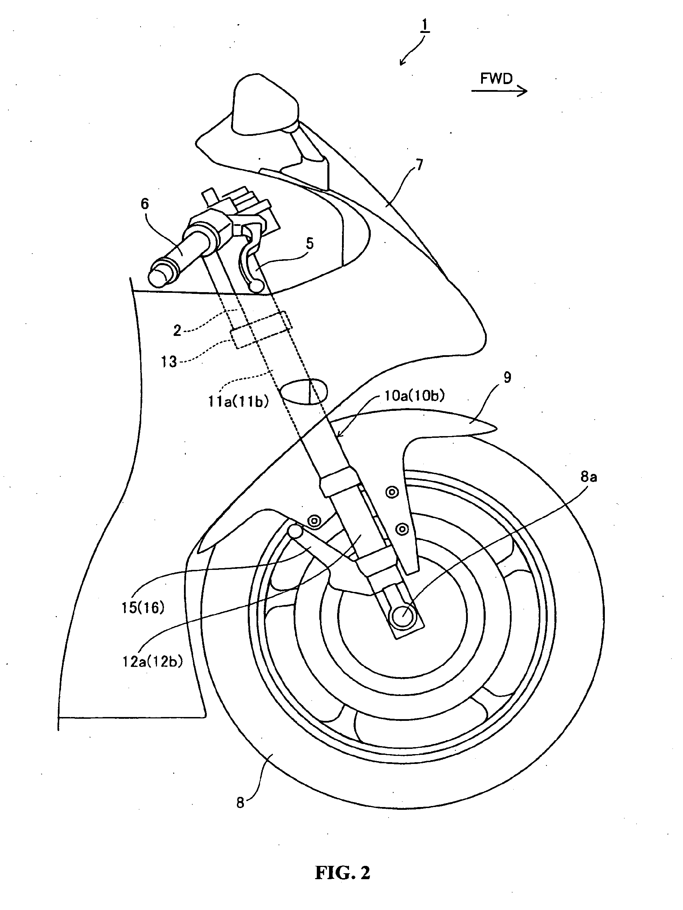

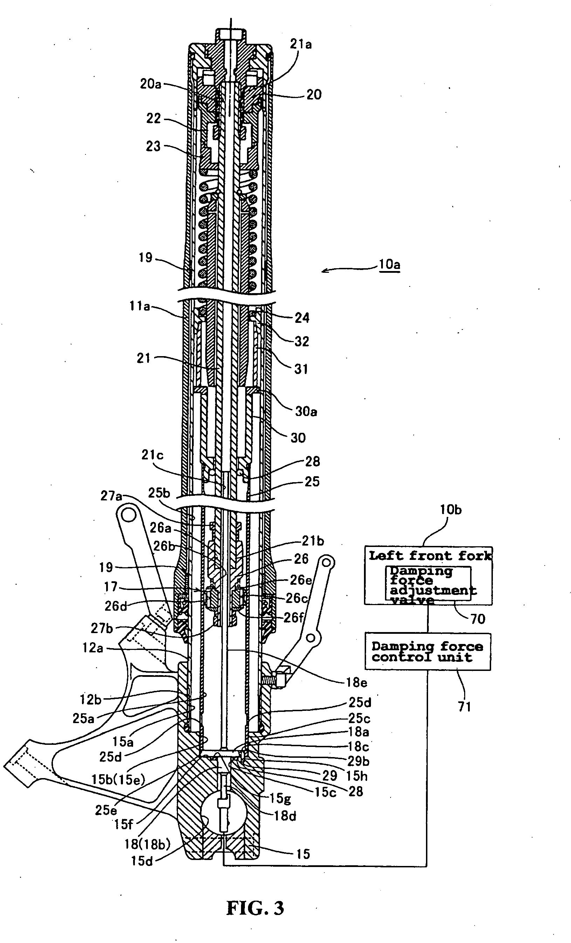

FIG. 1 is a side view illustrating the entire structure of a motorcycle according to a first embodiment of the present invention. FIG. 2 is a side view illustrating the structure of the front part of the motorcycle according to the first embodiment shown in FIG. 1. FIG. 3 to FIG. 7 illustrate in detail the structure of a front fork and a rear suspension of the motorcycle according to the first embodiment shown in FIG. 1. In the first embodiment, a motorcycle is taken as an example of the vehicle according to the present invention. In the drawings, FWD indicates the forward driving direction of the motorcycle. The structure of a motorcycle 1 according to the first embodiment of the present invention will be described hereinafter in detail with reference to FIG. 1 to FIG. 7.

In the motorcycle 1 according to the first embodiment of the present invention, as shown in FIG. 1, a main frame 3 is disposed behind a head pipe 2. A seat rail 4 is connected to the main frame 3. The head pipe 2, the main frame 3, and the seat rail 4 constitute a vehicle body frame. The head pipe 2, the main frame 3, and the seat rail 4 are examples of a "vehicle body" of the present invention.

A steering shaft 5 is mounted on the head pipe 2 as shown in FIG. 2. Handlebars 6 are mounted on top of the steering shaft 5. In addition, a front cowl 7 for covering the front part of the head pipe 2 is mounted in front of the head pipe 2. In addition, a front wheel 8 and a front fender 9 disposed over the front wheel 8 are disposed under the front cowl 7. The front wheel 8 is an example of a "wheel" of the present invention. The front wheel 8 is mounted in a freely rotatable manner at the lower ends of a right front fork 10a disposed on the right side of the front wheel 8 relative to the driving direction and a left front fork 10b disposed on the left side of the front wheel 8 relative to the driving direction. The right front fork 10a is an example of a "first suspension system" of the present invention, and the left front fork 10b is an example of the "second suspension system" of the present invention. The right front fork 10a has a function of damping a force in the expanding direction when the front wheel 8 and the vehicle body move relatively. In addition, the left front fork 10b has a function of damping a force in the expanding direction or the contracting direction when the front wheel 8 and the vehicle body move relatively.

The right front fork 10a includes an outer tube 11a and an inner tube 12a slidably mounted within the outer tube 11a, wherein the right front fork 10a can be expanded or contracted with its outer tube 11a and inner tube 12a axially slidable. Similarly, the left front fork 10b includes an outer tube 11b and an inner tube 12b slidably mounted within the outer tube 11a, wherein the right front fork 10a can be expanded or contracted with its outer tube 11b and inner tube 12b axially slidable. Each of the right front fork 10a and the left front fork 10b is of a telescopic type. The outer tubes 11a and 11b are fixed to an under bracket 13 and an upper bracket 14 (see FIG. 1) fixed to the steering shaft 5. In addition, axle brackets 15 and 16 are mounted on the inner tubes 12a and 12b, respectively, and an axle 8a of the front wheel 8 is mounted on the axle brackets 15 and 16. The axle bracket 15 is an example of a "bracket" of the present invention.

In the first embodiment, a damping mechanism 17 described below and a detection device 18 for detecting the amount of expansion or contraction of the right front fork 10a are mounted on the right front fork 10a as shown in FIG. 3. Meanwhile, a damping mechanism (not shown) and a damping force adjustment valve 70 are mounted on the left front fork 10b. The damping mechanism 17 is an example of a "first damping mechanism" of the present invention, and the detection device 18 is an example of a "detection member" of the present invention. In addition, the damping force adjustment valve 70 is an example of a "second damping mechanism" of the present invention.

A bushing 19 that slides on the outer circumferential surface of the inner tube 12a is mounted on the inner circumferential surface of the outer tube 11a of the right front fork 10a. In addition, a rod fixing member 20 is provided at the upper end of the outer tube 11a of the right front fork 10a to close the upper end opening of the outer tube 11a.

A rod part 21 is mounted to the rod fixing member 20. A screw hole 20a is formed in the lower part of the rod fixing member 20. An upper end outer circumference 21a on which screw threads are formed is formed at the upper end of the rod part 21. As the upper end outer circumference 21a of the rod part 21 is screwed into the screw hole 20a of the rod fixing member 20, the rod part 21 is fixed to the rod fixing member 20. The rod part 21 is constructed with a non-magnetic material such as aluminum and brass, and formed in the shape of a cylinder. An intermediate member 22 is fixed in the lower part of the rod fixing member 20 and an upper collar part 23 is mounted in the lower part of the intermediate member 22. The upper end of a compression coil spring 24 described below is disposed at the upper collar part 23. In addition, a lower end outer circumference 21b, on which screw threads are formed, of the rod part 21 is fixed to a screw hole 26a of a piston part 26 for damping expansion disposed in a cylinder part 25 described below. In addition, insertion holes 21c and 26b are formed in the inner circumferential surface of the rod part 21 and in the inner circumferential surface of the piston part 26 constructed with a non-magnetic material, respectively. The insertion holes 21c and 26b are examples of a "sensor insertion hole" of the present invention. In addition, the insertion hole 26b of the piston part 26 is configured such that the central axis of the insertion hole 26b of the piston part 26 is generally coaxial with the central axis of the insertion hole 21c of the rod part 21. The insertion holes 21c and 26b are each configured such that a sensor part 18e of the detection device 18 described below can be inserted thereinto.

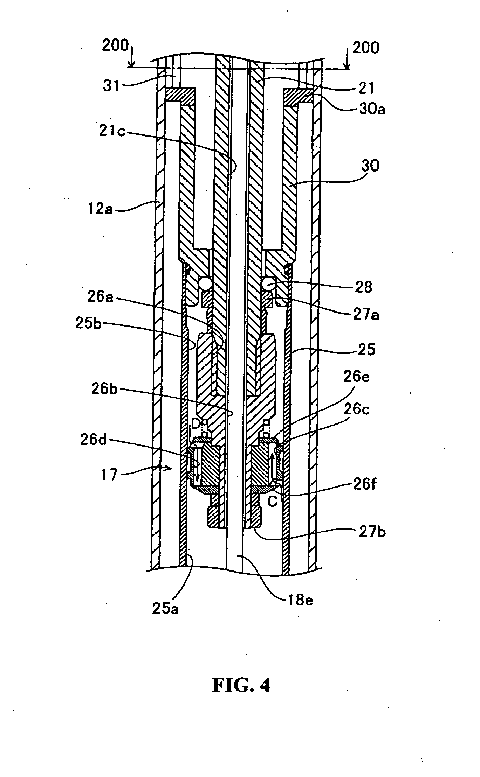

As shown in FIG. 4, a plurality of orifices 26c and 26d for passing oil are formed in the piston part 26. The orifices 26c have a function of passing oil in a middle oil chamber 25a below the piston part 26 to an upper oil chamber 25b above the piston part 26. The orifices 26d have a function of passing oil in the reverse direction from the upper oil chamber 25b to the middle oil chamber 25a. A washer 26e in the shape of a plate is disposed on the upper side of the orifices 26c and 26d to close the upper side of the orifices 26c and to leave the upper side of the orifices 26d open. In addition, a washer 26f in the shape of a plate is disposed on the lower side of the orifices 26c and 26d to leave the lower side of the orifices 26c open and close the lower side of the orifices 26d. The damping mechanism 17 is constructed with the piston part 26. The piston part 26 is an example of a "first damping mechanism" of the present invention.

Stoppers 27a and 27b are provided over and under the piston part 26, respectively. The stoppers 27a and 27b have a function of preventing the piston part 26 from moving relative to the rod part 21. In addition, a ring member 28 made of rubber is disposed over the stopper 27a. The ring member 28 has a function of damping impact when the piston part 26 contacts with an upper lid body 30 described below.

As shown in FIG. 3, a lower end outer circumference 12b, on which screw threads are formed, of the inner tube 12a of the right front fork 10a is fixed in a screw hole 15a of the axle bracket 15.

In the first embodiment, the axle bracket 15 includes the screw hole 15a described above in which the lower end outer circumference 12b of the inner tube 12a is mounted, an insertion hole 15b, described below, into which a flange part 18a of the detection device 18 is inserted, a positioning hole 15c, described below, into which a main body part 18b of the detection device 18 is inserted, and a through hole 15d for supporting the axle 8a of the front wheel 8.

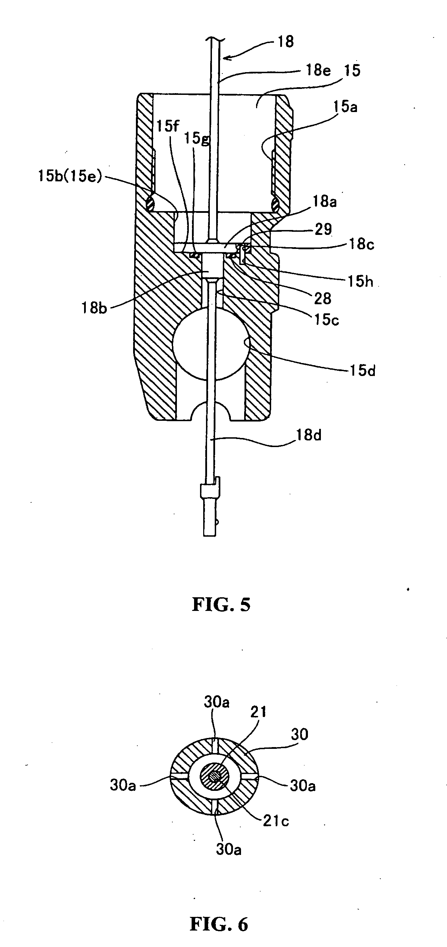

As shown in FIG. 5, the insertion hole 15b of the axle bracket 15 is formed under the screw hole 15a and has a hole diameter smaller than the hole diameter of the screw hole 15a. Additionally, the insertion hole 15b is configured such that the central axis of the insertion hole 15b is generally coaxial with the central axis of the screw hole 15a. A screw part 15e is formed on the inner circumferential surface of the insertion hole 15b and a bottom 15f extending in a direction perpendicular to the center line of the insertion hole 15b is formed under the insertion hole 15b. The bottom 15f is formed so as to support the surface of the flange part 18a of the detection device 18 inserted into the insertion hole 15b. The flange part 18a is formed in the shape of a disk, and provided to mount the detection device 18 to the inside of the right front fork 10a (see FIG. 3). The lower surface of the flange part 18a is an example of a "contact part" of the present invention. In other words, the flange part 18a constitutes the contact part of the detection device 18 according to the first embodiment, that is in contact with the inner end surface (bottom 15f) of the right front fork 10a as pushed thereto. The bottom 15f is formed with a groove 15g formed in the shape of a circle around the upper opening of the positioning hole 15c.

In the first embodiment, an O-ring 28 is disposed in the groove 15g. The O-ring 28 is interposed between the surface of the flange part 18a and the groove 15g of the bottom 15f of the axle bracket 15. As a result, it is possible to prevent the oil above the bottom 15f from flowing out of the right front fork 10a (see FIG. 3) through the positioning hole 15c. The O-ring 28 is an example of a "sealing member" of the present invention.

In the first embodiment, a pin hole 15h is formed between the groove 15g of the bottom 15f and the inner circumferential surface of the insertion hole 15b. A pin hole 18c is formed in the flange part 18a of the detection device 18. A pin 29 is fitted into each of the pin holes 15h and 18c. As a result, it is possible to prevent the detection device 18 from rotating relative to the right front fork 10a (see FIG. 3).

In the first embodiment, the positioning hole 15c is formed under the insertion hole 15b, and has a hole diameter smaller than the hole diameter of the insertion hole 15b. The positioning hole 15c is configured such that the central axis of the positioning hole 15c is generally coaxial with the central axis of the screw hole 15a. The main body part 18b provided under the flange part 18a of the detection device 18 is inserted into the positioning hole 15c. The outer diameter of the outer circumferential surface of the main body part 18b is configured so as to have generally the same dimension as the hole diameter of the positioning hole 15c. The lower opening of the positioning hole 15c is formed so as to merge or be connected with the inner circumferential surface of the through hole 15d. In other words, the positioning hole 15c is configured such that a wiring part 18d of the detection device 18 provided under the main body part 18b of the detection device 18 can extend externally of the right front fork 10a (see FIG. 3).

As shown in FIG. 3, the cylinder part 25 is fixed to the insertion hole 15b. Specifically, a screw part 25c is formed on the outer circumferential surface in the lower part of the cylinder part 25. The screw part 25c is screwed into the screw part 15e on the inner circumferential surface of the insertion hole 15b. The cylinder part 25 is an example of a "first cylinder part" of the present invention. A plurality of openings 25d are formed in the lower part of the side surface of the cylinder part 25. The openings 25d have a function of releasing oil in the middle oil chamber 25a to the space between the outer circumferential surface of the cylinder part 25 and the inner circumferential surface of the inner tube 12a when the rod part 21 and move piston 26 downwards.

The flange part 18a of the detection device 18 is disposed between the bottom 15f of the insertion hole 15b of the axle bracket 15 and a lower end 25e of the cylinder part 25. The flange part 18a of the detection device 18 is interposed with the surface of the flange part 18a pressed against the bottom 15f of the insertion hole 15b by the lower end 25e of the cylinder part 25. As a result, it is possible to mount the detection device 18 to the axle bracket 15 in a stable state. The lower end 25e is an example of a "one end" of the present invention.

The upper lid body 30 is fixed on top of the cylinder part 25. As shown in FIG. 6, four engagement parts 30a are provided on top of the upper lid body 30. The engagement parts 30a have a function of providing engagement for a certain tool (not shown) when the screw part 25c of the cylinder part 25 (see FIG. 3) is screwed into the screw part 15e of the axle bracket 15 (see FIG. 3). As shown in FIG. 3, a lower collar part 32 is provided over the upper lid body 30 via an intermediate member 31. The compression coil spring 24 is disposed between the upper surface of the lower collar part 32 and the lower surface of the upper collar part 23. The compression coil spring 24 has a function of damping impact when the outer tube 11a and the inner tube 12a of the right front fork 10a are contracted.

The sensor part 18e is inserted into the insertion hole 21c of the rod part 21 and the insertion hole 26b of the piston part 26 so as to be slidable relative to the insertion hole 21c and the insertion hole 26b. The sensor part 18e is formed so as to extend upward (toward the insertion holes 21c and 26b) from the center part of the upper surface of the flange part 18a of the detection device 18. The sensor part 18e is a displacement sensor part utilizing inductance changes of a coil and has a function of detecting the length thereof inserted into the insertion hole 21c of the rod part 21 and the insertion hole 26b of the piston part 26 made of a non-magnetic material. In addition, the detection device 18 is constructed such that an electric signal detected with the sensor part 18e is transmitted externally of the right front fork 10a such as a damping force control unit 71 via an IC circuit (not shown) and the wiring part 18d in the main body part 18b.

The left front fork 10b is provided with a rod part (not shown) and a cylinder part (not shown) constituting the damping mechanism, and a piston part (not shown) for damping expansion, in the same manner as the right front fork 10a. However, the left front fork 10b does not include a sensor part (a detection member). As a result, an insertion hole for inserting a sensor part is not provided to the rod part (not shown), the piston part (not shown) for damping expansion, and the axle bracket 15 of the left front fork 10b, unlike in the right front fork 10a. As noted above, the left front fork 10b includes a damping force adjustment valve 70 (see FIG. 3) which is connected with the damping force control unit 71 (see FIG. 3), and has a function of controlling damping characteristics by adjusting the pressure of oil in the left front fork 10b, etc., according to a signal from the damping force control unit 71.

As shown in FIG. 1, a fuel tank 33 is disposed on top of the main frame 3 and a seat 34 is disposed behind the fuel tank 33. An engine 35 is mounted under the main frame 3 and a radiator 36 for cooling the engine 35 is provided in front of the engine 35. A pivot shaft (not shown) is provided at the rear part of the main frame 3 and the front end of a rear arm 37 is supported by the pivot shaft so as to be vertically pivotable. A rear wheel 38 is rotatably mounted at the rear end of the rear arm 37. The rear wheel 38 is an example of a "wheel" of the present invention.

A supporting part 3a is provided on the upper side in the rear part of the main frame 3. An upper mounting part 40 of a rear suspension 39 is mounted to the supporting part 3a via a shaft member 41. The rear suspension 39 is an example of a "suspension system" of the present invention. The upper mounting part 40 is an example of a "bracket" of the present invention. A lower mounting part 42 of the rear suspension 39 (see FIG. 1) is mounted to a pivot member 43 provided so as to be pivotable around a supporting part 3b provided on the lower side of the rear part of the main frame 3. The lower part of the pivot member 43 is connected with a supporting part 37a of the rear arm 37 by a connecting member 44. As a result, as the rear arm 37 pivots vertically, the pivot member 43 pivots around the supporting part 3b of the main frame 3, and the rear suspension 39 (see FIG. 1) can be expanded or contracted.

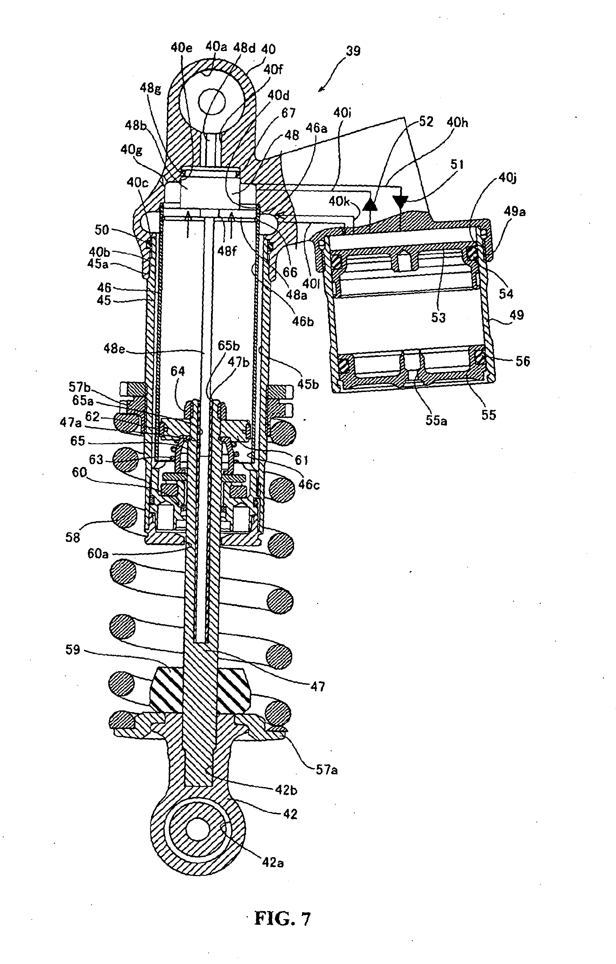

In the first embodiment, only one rear suspension 39 is provided. As shown in FIG. 7, the rear suspension 39 includes the upper mounting part 40 mounted to the supporting part 3a (see FIG. 1) of the main frame 3, the lower mounting part 42 mounted to the supporting part 3b (see FIG. 1) of the main frame 3, an outer cylinder part 45 provided between the upper mounting part 40 and the lowermountingpart 42, an inner cylinder part 46 disposed in the outer cylinder part 45, a rod part 47 fixed to the lower mounting part 42, a damping mechanism described below, a detection device 48 for detecting the amount of expansion or contraction of the rear suspension 39, and a reservoir tank 49 mounted to the upper mounting part 40. The inner cylinder part 46 is an example of a "first cylinder part" of the present invention, the detection device 48 is an example of a "detection member" of the present invention and the reservoir tank 49 is an example of a "second cylinder part" of the present invention.

The upper mounting part 40 is provided with a mounting hole 40a for mounting to the shaft member 41 (see FIG. 1). The mounting hole 40a is provided so as to be rotatable relative to the shaft member 41. A screw part 40b for mounting the outer cylinder part 45 is provided to the lower end of the upper mounting part 40. A mounting part 45a provided on the outer circumferential surface of the upper end of the outer cylinder part 45 is screwed into the screw part 40b. An engagement groove 40c is formed in the upper end of the screw part 40b. An O-ring 50 is disposed in the engagement groove 40c. As a result, the space between the upper mounting part 40 and the outer cylinder part 45 can be sufficiently sealed.

A screw part 40d for mounting the inner cylinder part 46 is provided above the screw part 40b of the upper mounting part 40,. The screw part 40d is constructed so as to have a diameter smaller than the diameter of the screw part 40b for mounting the outer cylinder part 45, and formed so as to be screwed into a mounting part 46a provided on the outer circumferential surface of the upper end of the inner cylinder part 46. In addition, the screw part 40d is constructed such that the central axis of the screw part 40d is coaxial with the central axis of the screw part 40b.

A positioning hole 40e, into which a main body part 48b of the detection device 48 is fitted from the inside of the rear suspension 39, is formed above the screw part 40d of the upper mounting part 40. The positioning hole 40e is configured such that the central axis of the positioning hole 40e is coaxial with the central axis of the screw part 40b. The outer diameter of the outer circumferential surface of the main body part 48b of the detection device 48 is constructed so as to have generally the same dimension as the hole diameter of the positioning hole 40e. A through hole 40f connected with the inner circumferential surface of the mounting hole 40a is formed in the upper surface of the positioning hole 40e. The through hole 40f is configured such that a wiring part 48d of the detection device 48 provided at one side (the upper part) of the main body part 48b of the detection device 48 can extend externally of the rear suspension 39.

The upper mounting part 40 is formed with an oil injection port 40g connecting the inner surface between the screw part 40d and the positioning hole 40e and the outside of the rear suspension 39, and two oil passages 40h and 40i connecting the inner surface between the screw part 40d and the positioning hole 40e and a contraction side damping mechanism 51 and an expansion side damping mechanism 52 of the damping mechanism. The contraction side damping mechanism 51 and the expansion side damping mechanism 52 are examples of a "first damping mechanism" of the present invention. The oil injection port 40g is provided to inject oil into the rear suspension 39 when the rear suspension 39 is assembled. The oil passage 40h is provided to lead oil existing in an upper oil chamber 46b of the inner cylinder part 46 into the contraction side damping mechanism 51 when the rear wheel 38 (see FIG. 1) and the vehicle body are moved relatively in the contracting direction. The contraction side damping mechanism 51 has a function of generating a damping force for the contraction side damping mechanism 51 by giving resistance to the oil flowing when oil flows in from the inner cylinder part 46. The expansion side damping mechanism 52 has a function of generating a damping force for the expansion side damping mechanism 52 by giving resistance to the oil flowing when oil flows in from the reservoir tank 49 side when the rear wheel 38 (see FIG. 1) and the vehicle body are moved relatively in the expanding direction. The oil passage 40i is providedto return oil flowing out of the expansion side damping mechanism 52 to the upper oil chamber 46b of the inner cylinder part 46.

A screw part 40j for mounting the reservoir tank 49 is provided to an upper mounting part 40. The screw part 40j is formed so as to be screwed with a mounting part 49a provided on the outer circumferential surface of the upper end of the reservoir tank 49. The upper part of the screw part 40j is connected with the contraction side damping mechanism 51 and the expansion side damping mechanism 52, and connected with oil passages 40k and 401. The oil passages 40k and 401 are provided to connect the upper part of the screw part 40b and the screw part 40j of the upper mounting part 40. In other words, the contraction side damping mechanism 51 and the expansion side damping mechanism 52 are each constructed so as to be connected with an oil chamber 45b between the outer circumferential surface of the inner cylinder part 46 and the outer cylinder part 45.

A free piston part 53 is disposed on the inner circumferential surface of the reservoir tank 49. An O-ring 54 is disposed on the outer circumferential surface of the free piston part 53. The reservoir tank 49 on the upper side of the free piston part 53 (on the screw part 40j side) is filled with oil. The reservoir tank 49 on the lower side of the free piston part 53 (on the opposite side of the screw part 40j) is filled with high-pressure nitrogen gas (about 6.0 bars to about 12.0 bars). A lid body 55 is fitted into the lower end of the reservoir tank 49, and an O-ring 56 is disposed between the reservoir tank 49 and the lid body 55. A gas filling port 55a for filling the reservoir tank 49 with nitrogen gas is provided in the lid body 55.

A mounting hole 42a for mounting to the pivot member 43 (see FIG. 1) is provided in the lower mounting part 42. A rod mounting hole 42b is formed in the upper end of the lower mounting part 42, and the lower part of the rod part 47 is mounted within the rod mounting hole 42b. A lower collar part 57a is disposed at the upper part of the lower mounting part 42, and the lower end of a compression coil spring 58 is disposed adjacent the lower collar part 57a. A cushion member 59 made of urethane foam is disposed on the inner side of the compression coil spring 58 of the lower collar part 57a.

An upper collar part 57b is fixed on the outer circumferential surface of the outer cylinder part 45 and the upper end of the compression coil spring 58 is disposed adjacent the upper collar part 57b. The compression coil spring 58 has a function of urging the upper collar part 57b upward and urging the lower collar part 57a downward. As a result, it is possible to suppress impact in the contracting direction received by the rear wheel 38 (see FIG. 1) and the vehicle body.

A lid unit 60 is fitted into the lower end of the outer cylinder part 45. The lid unit 60 is formed with a rod insertion part 60a and one end of the rod part 47 is inserted from the rod insertion part 60a and disposed in the inner cylinder part 46. A space is defined between the rod insertion part 60a and the lower end of the inner cylinder part 46, where oil in the oil chamber 45b between the outer circumferential surface of the inner cylinder part 46 and the outer cylinder part 45 and oil in a lower oil chamber 46c of the inner cylinder part 46 can communicate with each other.

A piston part 61 is mounted in the vicinity of one end of the rod part 47. The piston part 61 is not provided with an oil passage (orifice) for connecting the upper oil chamber 46b and the lower oil chamber 46c, unlike the piston part 26 (see FIG. 4) of the right front fork 10a (see FIG. 3). In other words, the piston part 61 is constructed such that oil existing in the upper oil chamber 46b and oil existing in the lower oil chamber 46c do not communicate with each other. A slide metal 62 is fitted in the outer circumferential surface of the piston part 61.

A return spring unit 63 is disposed under the piston part 61 of the rod part 47, and has a function of suppressing impact when the piston part 61 contacts with the lid unit 60. A stopper 64 is mounted over the piston part 61 of the rod part 47.

An insertion hole 47a formed from one end side toward the lower mounting part 42 is provided on the central axis of the rod part 47. A pipe 65 constructed with a non-magnetic material such as aluminum and brass is inserted into the insertion hole 47a. A sensor part 48e provided so as to extend from a flange part 48a of the detection device 48 toward the other side (the lower side) is inserted into an insertion hole 65a of the pipe 65. The insertion holes 47a and 65a are examples of a "sensor insertion hole" of the present invention. In addition, ends 47b and 65b of the insertion hole 47a of the rod part 47 and the insertion hole 65a of the pipe 65 on the side where the sensor part 48e is inserted (the upper side) are formed in a tapering shape having a larger opening area toward the upper side. The sensor part 48e, which is similar to the sensor part 18e (see FIG. 5), is a displacement sensor part utilizing inductance changes of a coil, and has a function of detecting the length thereof inserted into the insertion hole 65a of the pipe 65 made of a non-magnetic material. In addition, the detection device 48 is constructed so as to transmit an electric signal detected with the sensor part 48e to the outside of the rear suspension 39 such as the damping force control unit 71 (see FIG. 3) via an IC circuit (not shown) and the wiring part 48d in the main body part 48b. The contraction side damping mechanism 51 and the expansion side damping mechanism 52 are connected with the damping force control unit 71 (see FIG. 3), and has a function of controlling damping characteristics by adjusting the pressure of oil in the rear suspension 39, etc., according to a signal from the damping force control unit 71.

The flange part 48a of the detection device 48 has generally the same diameter as the hole diameter of the inner circumferential surface of the inner cylinder part 46. The flange part 48a includes a plurality of notches 48f formed by cutting the flange part 48a from the outer circumferential surface of the flange part 48a toward the center of the flange part 48a. In other words, the flange part 48a is constructed such that oil on the lower side of the flange part 48a (on the rod part 47 side) and oil on the upper side of the flange part 48a (on the upper mounting part 40 side) can communicate with each other. A ring member 66 made of metal is mounted under the flange part 48a of the inner cylinder part 46.

A groove 48g in the shape of a circle is formed in the outer circumferential surface of the main body part 48b of the detection device 48. An O-ring 67 is disposed in the groove 48g and as such it is possible to seal the space between the outer circumferential surface of the main body part 48b and the inner circumferential surface of the positioning hole 40e. Consequently, it is possible to prevent air on the upper side of the O-ring 67 (on the through hole 40f side) from entering the inside of the rear suspension 39. In addition, it is possible to prevent oil on the lower side of the O-ring 67 (on the inner cylinder part 46 side) from flowing out of the rear suspension 39. The groove 48g is an example of a "recess" of the present invention. The O-ring 67 is an example of a "sealing member" of the present invention.

The rear suspension 39 according to the first embodiment is constructed such that the oil pressure (about 6.0 bars to about 12.0 bars) inside the rear suspension 39 with respect to the O-ring 67 is always larger than the atmospheric pressure (about 1.0 bar) outside the rear suspension 39 with respect to the O-ring 67. The oil pressure in the upper oil chamber 46b presses the O-ring 67 upward (toward the through hole 40f). Consequently, the detection device 48 is constructed so as to be fixed to the upper mounting part 40 as the main body part 48b presses the upper surface of the positioning hole 40e of the upper mounting part 40. The oil pressure is an example of a "first pressure" of the present invention, the atmospheric pressure is an example of a "second pressure" of the present invention, and the upper surface of the main body part 48b is an example of a "contact part" of the present invention. In other words, the main body part 48b constitutes the contact part that is in contact with the inner end surface of the rear suspension 39 (the upper end surface of the positioning hole 40e) of the detection device 48 according to the first embodiment as pushed thereto. As mentioned above, as the detection device 48 is fixed to the upper mounting part 40 by the oil pressure, a screw or the like is not used for fixing the detection device 48 to the upper mounting part 40. Consequently, an assembly process can be improved. In addition, it is possible to prevent the sensor part 48e and the insertion hole 65a from being displaced by the friction force generated between the sensor part 48e and the insertion hole 65a.

The operation of the right front fork 10a and the rear suspension 39 of the motorcycle 1 according to the first embodiment will be described hereinafter. With reference to FIG. 3 and FIG. 4, the operation of the right front fork 10a of the motorcycle 1 according to the first embodiment will now be described.

A case where a force in the contracting direction is applied to the right front fork 10a (see FIG. 3) will be described hereinafter. When a force in the contracting direction is applied to the right front fork 10a, the right front fork 10a becomes shorter against the urging force of the compression coil spring 24 (see FIG. 4).

Specifically, as shown in FIG. 3, when the piston part 26 and the rod part 21 are lowered relative to the cylinder part 25, the volume of the upper oil chamber 25b is expanded. Consequently, as shown in FIG. 4, oil in the middle oil chamber 25a flows in the direction C through the orifice 26c of the piston part 26, and into the upper oil chamber 25b. At this time, oil in the middle oil chamber 25a is released to the space between the outer circumferential surface of the cylinder part 25 and the inner circumferential surface of the inner tube 12a through the opening 25d.

A case where a force in the expanding direction is applied to the right front fork 10a will be described hereinafter. When a force in the expanding direction is applied to the right front fork 10a, a damping force is generated as the right front fork 10a is expanded.

Specifically, as shown in FIG. 3 and FIG. 4, when the piston part 26 and the rod part 21 are raised relative to the cylinder part 25, the pressure in the upper oil chamber 25b is increased, and the washer 26f of the piston part 26 is opened. Oil in the upper oil chamber 25b flows in the direction D (see FIG. 4) through the orifice 26d of the piston part 26, and flows into the middle oil chamber 25a. At this time, the volume of the middle oil chamber 25a is expanded. Consequently, oil existing between the outer circumferential surface of the cylinder part 25 and the inner circumferential surface of the inner tube 12a is returned to the middle oil chamber 25a through the opening 25d. In addition, in this case, a damping force is generated by the resistance of oil flowing through the orifice 26d of the piston part 26 for damping expansion, etc.

When the right front fork 10a expands or contracts, inductance varies as the sensor part 18e moves relatively in the rod part 21. The length of the sensor part 18e inserted into the insertion hole 21c of the rod part 21 and into the insertion hole 26b of the piston part 26 made of a non-magnetic material is detected based on the variations in inductance. As a signal corresponding to the detected length is input to the damping force control unit 71 (see FIG. 3), the amount of expansion or contraction is detected.

With reference to FIG. 3 and FIG. 7, the operation of the rear suspension 39 of the motorcycle 1 according to the first embodiment will be described hereinafter.

A case where a force in the contracting direction is applied to the rear suspension 39 will be described hereinafter. When the force in the contracting direction is applied to the rear suspension 39, the rear suspension 39 is made shorter against the urging force of the compression coil spring 58.

Specifically, as shown in FIG. 7, when the piston part 61 and the rod part 47 are raised relative to the inner cylinder part 46, oil in the upper oil chamber 46b is pressed by the piston part 61, and the pressure in the upper oil chamber 46b is increased. The oil in the upper oil chamber 46b flows into the contraction side damping mechanism 51 through the notches 48f of the flange part 48a of the detection device 48 and the oil passage 40h. The oil having flowed into the contraction side damping mechanism 51 generates a damping force in the rear suspension 39 by the resistance of flowing in the contraction side damping mechanism 51. After this, the oil having passed through the contraction side damping mechanism 51 flows into the lower oil chamber 46c through the reservoir tank 49, the oil passage 40k, and the oil chamber 45b.

A case where a force in the expanding direction is applied to the rear suspension 39 will be described hereinafter. When a force in the contracting direction is applied to the rear suspension 39, a damping force is generated as the rear suspension 39 is expanded.

Specifically, when the piston part 61 and the rod part 47 are lowered relative to the inner cylinder part 46, oil in the lower oil chamber 46c is pushed by the piston part 61, and the pressure in the lower oil chamber 46c is increased. The oil in the lower oil chamber 46c flows into the expansion side damping mechanism 52 through the oil chamber 45b and the oil passage 401 and the reservoir tank 49. The oil having flowed into the expansion side damping mechanism 52 generates a damping force in the rear suspension 39 by the resistance of flowing in the expansion side damping mechanism 52. After this, the oil having passed through the expansion side damping mechanism 52 flows into the upper oil chamber 46b through the oil passage 40i and the notches 48f of the flange part 48a of the detection device 48.

When the rear suspension 39 expands or contracts, inductance varies as the sensor part 48e of the detection device 48 moves relatively in the rod part 47. The length of the sensor part 48e inserted into the insertion hole 65a of the pipe 65 made of a non-magnetic material is detected based on the variations in inductance. As a signal corresponding to the detected length is input to the damping force control unit 71 (see FIG. 3), the amount of expansion or contraction is detected.

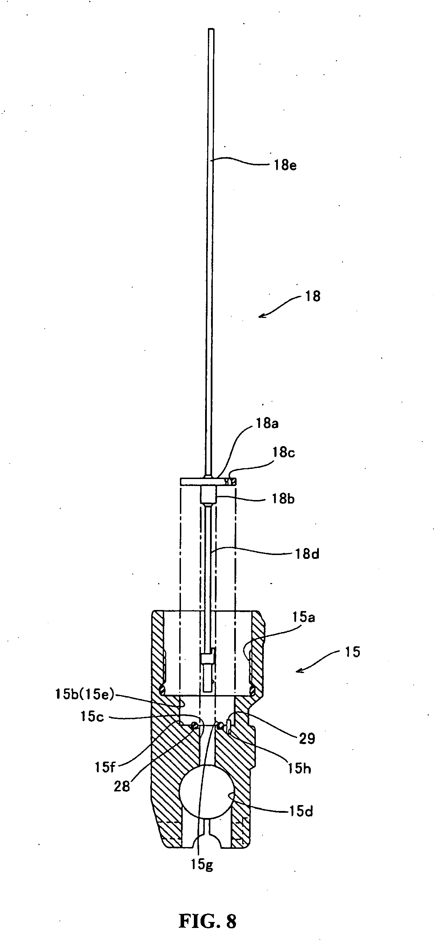

FIG. 8 to FIG. 12 are views for explaining the assembly process of the right front fork of the motorcycle according to the first embodiment. With reference to FIG. 3, FIG. 6, and FIG. 8 to FIG. 12, the assembly process of the right front fork 10a of the motorcycle 1 according to the first embodiment will be described hereinafter.

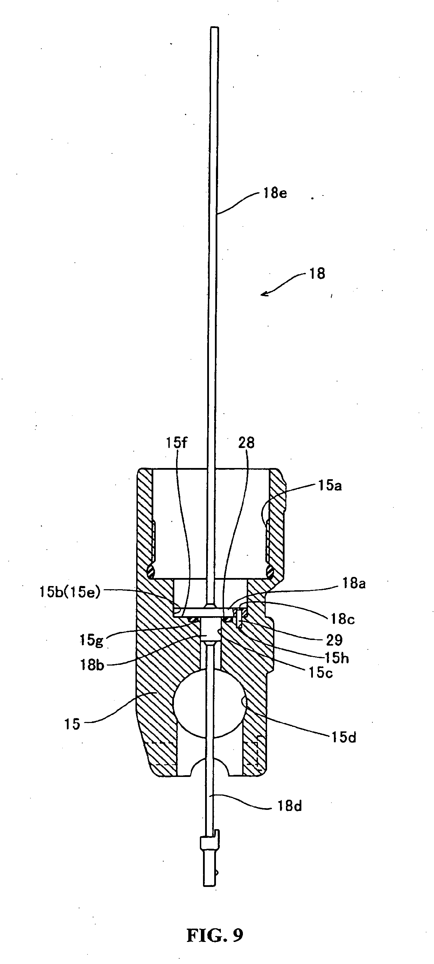

As shown in FIG. 8, the O-ring 28 is disposed in the groove 15g of the insertion hole 15b of the axle bracket 15, and the pin 29 is fitted into the pin hole 15h. The main body part 18b is inserted into the positioning hole 15c of the axle bracket 15 from the side of the wiring part 18d of the detection device 18. After this, as shown in FIG. 9, the flange part 18a of the detection device 18 is disposed in the insertion hole 15b. At this time, the pin 29 fitted into the pin hole 15h is inserted into the pin hole 18c of the flange part 18a. The O-ring 28 disposed in the groove 15g is interposed between the surface of the flange part 18a and the groove 15g (bottom 15f).

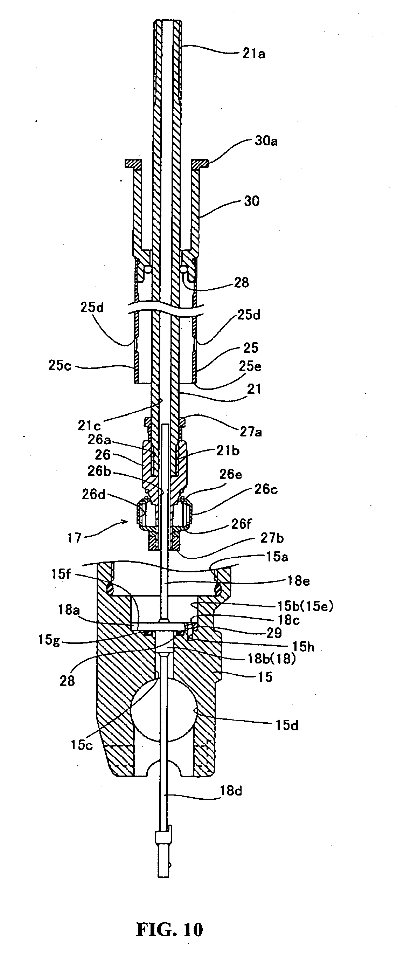

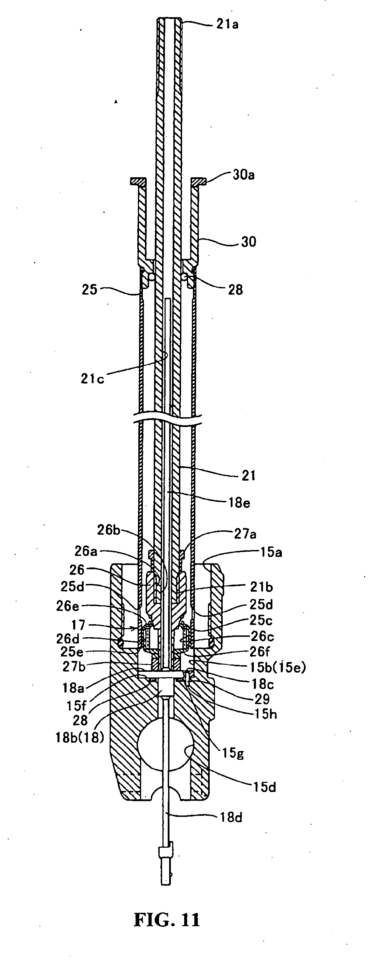

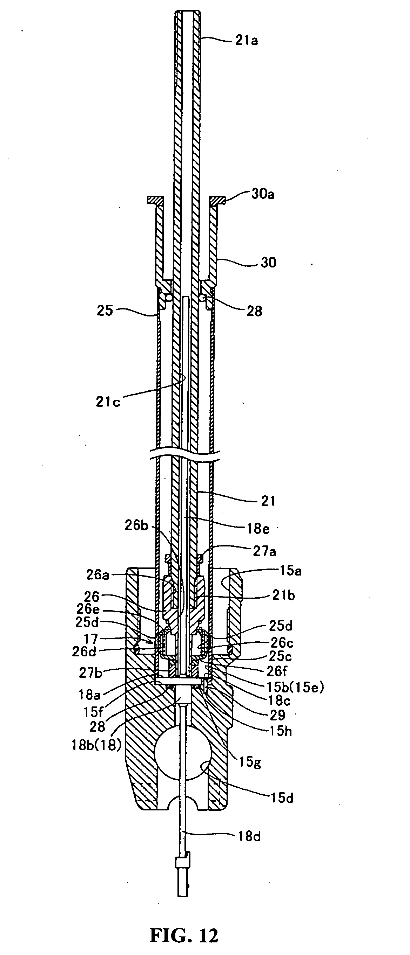

As shown in FIG. 10 and FIG. 11, the sensor part 18e of the detection device 18 is inserted into the insertion hole 21c of the rod part 21 made of a non-magnetic material and the insertion hole 26b of the piston part 26. While the piston part 26 is inserted along the inner circumferential surface of the cylinder part 25, the screw part 25c of the cylinder part 25 is screwed into the screw part 15e on the inner circumferential surface of the insertion hole 15b. Specifically, as shown in FIG. 6 and FIG. 12, a certain tool (not shown) is engaged with the engagement part 30a of the upper lid body 30 fixed on top of the cylinder part 25. The screw part 25c of the cylinder part 25 is firmly fixed to the screw part 15e on the inner circumferential surface of the insertion hole 15b by rotating the upper lid body 30 and the cylinder part 25. At this time, the surface of the flange part 18a of the detection device 18 is interposed between the lower end 25e of the cylinder part 25 and the bottom 15f of the insertion hole 15b. Consequently, the detection device 18 is firmly fixed to the axle bracket 15.

As shown in FIG. 3, the lower end outer circumference 12b of the inner tube 12a is screwed into the screw hole 15a of the axle bracket 15, and the outer tube 11a is disposed outside the inner tube 12a. After this, the compression coil spring 24 is disposed around the rod part 21, and the upper collar part 23 is mounted on the rod part 21. Consequently, the compression coil spring 24 is mounted between the lower surface of the upper collar part 23 and the upper surface of the upper lid body 30 of the cylinder part 25. The upper end outer circumference 21a, on which screw threads are formed, of the rod part 21 is fixed to the screw hole 20a of the rod fixing member 20. After this, the upper end of the outer tube 11a is fixed to the rod fixing member 20. In this way, assembly of the right front fork 10a is completed.

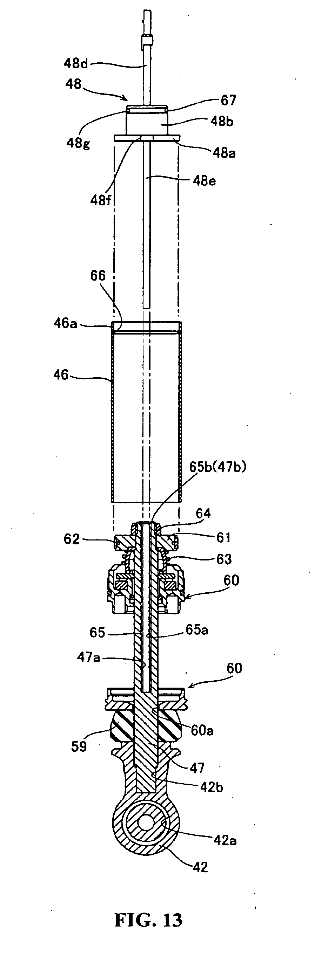

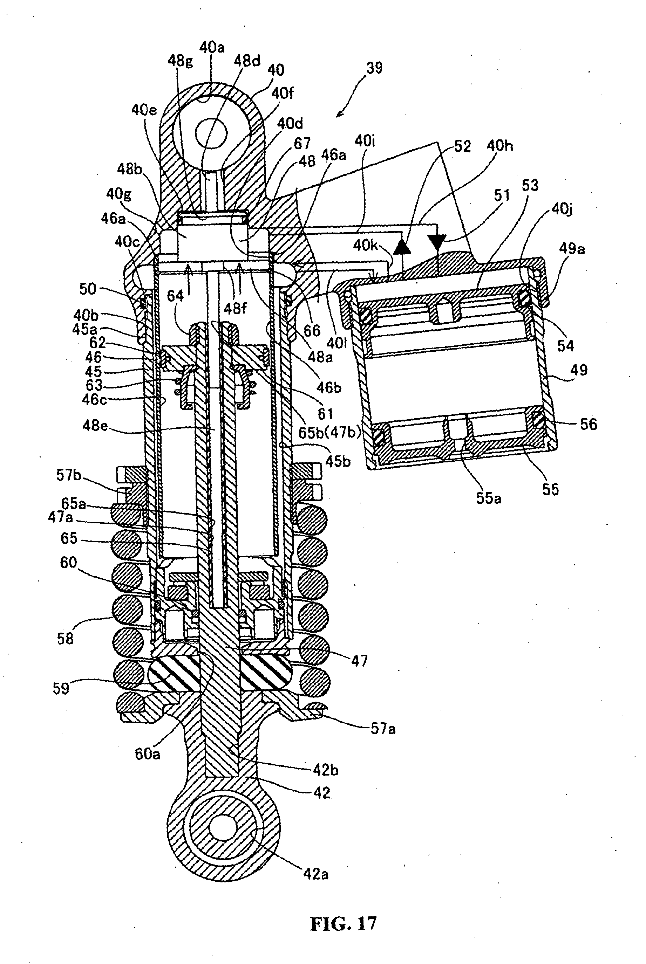

FIG. 13 to FIG. 17 are views for explaining the assembly process of the rear suspension of the motorcycle according to the first embodiment. With reference to FIG. 13 to FIG. 17, the assembly process of the rear suspension 39 of the motorcycle 1 according to the first embodiment will be described hereinafter.

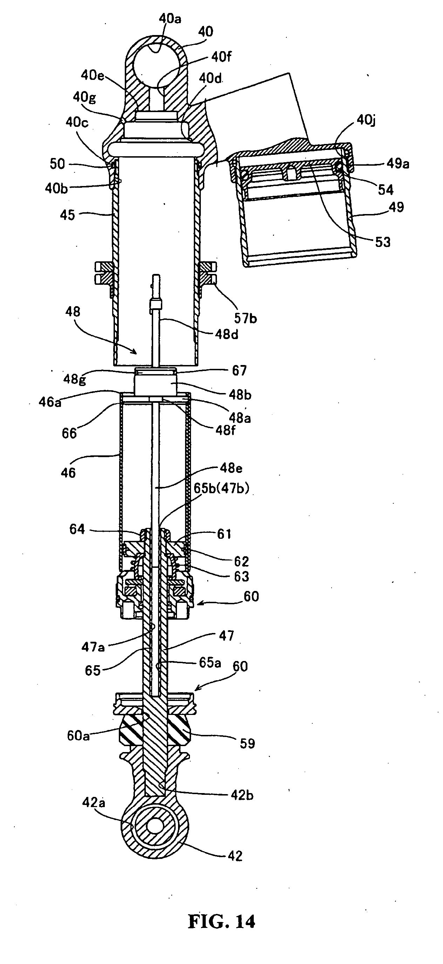

As shown in FIG. 13, the lower part of the rod part 47 is mounted to the rod mounting hole 42b of the lower mounting part 42. The rod part 47 is inserted into the cushion member 59 and the rod insertion part 60a of the lid unit 60. The return spring unit 63, the piston part 61 and the stopper 64 are mounted to the rod part 47. After this, as shown in FIG. 13 and FIG. 14, the piston part 61 is inserted into the inner cylinder part 46, and the sensor part 48e of the detection device 48 is inserted into the insertion hole 65a of the pipe 65. At this time, as the openings at the end 47b of the insertion hole 47a of the rod part 47 and the end 65b of the pipe 65 are formed in a tapering shape having a larger opening area toward the upper side, the sensor part 48e can be easily inserted into the insertion hole 65a of the pipe 65. As a result, the assembly workability can be improved. At this time, the flange part 48a of the detection device 48 is inserted into the inner cylinder part 46.

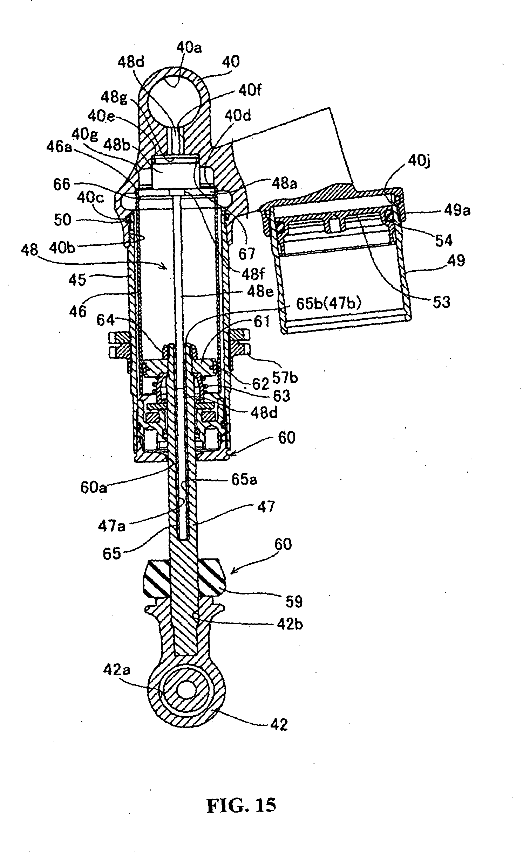

As shown in FIG. 14 and FIG. 15, the outer cylinder part 45 is disposed so as to cover the outside of the inner cylinder part 46, and the mounting part 46a of the inner cylinder part 46 is screwed into the screw part 40d of the upper mounting part 40. As shown in FIG. 15, the lid unit 60 and the lower end of the outer cylinder part 45 are fixed. At this time, the wiring part 48d of the detection device 48 is drawn out from the through hole 40f, and the main body part 48b with the O-ring 67 disposed in the groove 48g is inserted into the positioning hole 40e. As a result, the inside of the rear suspension 39 is sealed. After this, the rear suspension 39 is filled with oil by injecting oil from the oil injection port 40g.

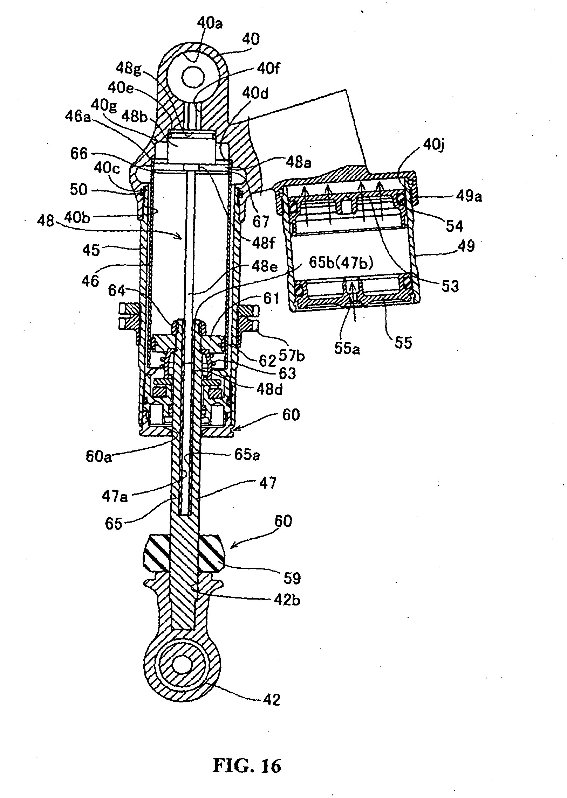

As shown in FIG. 16, the lid body 55 is fitted into the lower end of the reservoir tank 49, and high-pressure nitrogen gas is charged from the gas filling port 55a. As a result, as the free piston part 53 is raised by the high-pressure nitrogen gas, it is possible to maintain the oil charged in the rear suspension 39 at a high pressure (about 6.0 atmospheres to about 12.0 atmospheres). As a result, the oil pressure inside the rear suspension 39 with respect to the O-ring 67 disposed in the groove 48g of the main body part 48b of the detection device 48 can be always larger than the atmospheric pressure outside the rear suspension 39 with respect to the O-ring 67. Consequently, it is possible to push the main body part 48b inserted into the positioning hole 40e on the upper surface of the positioning hole 40e, and to fix the detection device 48 to the upper mounting part 40. After this, while the compression coil spring 58 is disposed between the upper collar part 57b and the lower collar part 57a, the lower collar part 57a is mounted to the lower mounting part 42. In this way, assembly of the rear suspension 39 is completed.

In the first embodiment, as mentioned above, the right front fork 10a including the damping mechanism 17 (piston part 26) for damping at least either one of the forces in the expanding direction and the contracting direction when the front wheel 8 and the vehicle body move relatively and the detection device 18 disposed in the right front fork 10a and including the sensor part 18e, the main body part 18b, and the flange part 18a provided to the main body part 18b to detect the state of expansion or contraction when the front wheel 8 and the vehicle body move relatively are provided. As a result, not only the detection device 18 for detecting the state of expansion or contraction but also the damping mechanism 17 is built in the right front fork 10a. Consequently, it is passable to cause the right front fork 10a to have both a function of detecting the state of expansion or contraction and a function of damping. As a result, for instance, when the left front fork 10b having only a damping mechanism (not shown) is paired with the right front fork 10a, at least either one of the forces in the expanding direction and the contracting direction can be damped when the front wheel 8 and the vehicle body move relatively not only by the damping mechanism (not shown) of the left front fork 10b but also by the damping mechanism 17 of the right front fork 10a. As a result, it is possible to provide a wide adjustment range of damping force when the detection device 18 is disposed in the right front fork 10a.

The rear suspension 39 including the contraction side damping mechanism 51 and the expansion side damping mechanism 52 for damping a force in the contracting direction or in the expanding direction when the rear wheel 38 and the vehicle body move relatively and the detection device 48 disposed in the rear suspension 39 and including the sensor part 48e, the main body part 48b, and the flange part 48a provided to the main bodypart 48b to detect the state of expansion or contraction when the rear wheel 38 and the vehicle body move relatively are provided. As a result, it is possible to damp a force in the contracting direction or in the expanding direction when the rear wheel 38 and the vehicle body move relatively without providing a rear suspension other than the rear suspension 39.

Also, it is possible to easily seal the space between the right front fork 10a and the detection member 18, and to prevent oil in the right front fork 10a from flowing out, by providing the sealing member 28 disposed between the inner surface of the right front fork 10a and the detection device 18.

In addition, by fitting the pin 29 into the pin hole 18c of the detection device 18 and the pin hole 15h of the axle bracket 15, the pin 29 can easily prevent the detection device 18 from rotating relative to the right front fork 10a (axle bracket 15).

Also, by forming the groove 48g in the shape of a circle in which the O-ring 67 is disposed in the outer circumferential surface of the main body part 48b of the detection device 48, it is possible to prevent the O-ring 67 from moving on the outer circumferential surface of the main body part 48b of the detection device 48, and thus to prevent the O-ring 67 from deviating from the main body part 48b of the detection device 48.

In addition, in the first embodiment, the detection device 18 is fixed to the axle bracket 15 by the flange part 18a being interposed between the bottom 15f of the insertion hole 15b of the axle bracket 15 and the lower end 25e of the cylinder part 25. As a result, it is possible to prevent the flange part 18a of the detection device 18 from shaking relative to the axle bracket 15. Consequently, it is possible to easily mount the detection device 18 to the axle bracket 15.

As described above, the detection device 18 is mounted to the axle bracket 15 by screwing the screw part 25c of the cylinder part 25 into the screw part 15e of the insertion hole 15b of the axle bracket 15 such that the surface of the flange part 18a of the detection device 18 is pressed against the bottom 15f of the insertion hole 15b of the axle bracket 15 by the lower end 25e of the cylinder part 25. As a result, it is possible to firmly hold the flange part 18a between the bottom 15f of the insertion hole 15b of the axle bracket 15 and the lower end 25e of the cylinder part 25 by the screw part 25c of the cylinder part 25 and the screw part 15e of the insertion hole 15b of the axle bracket 15. Consequently, it is possible to reliably fix the detection device 18.

The rear suspension 39 is constructed such that the oil pressure inside the rear suspension 39 with respect to the O-ring 67 is larger than the atmospheric pressure outside the rear suspension 39 with respect to the O-ring 67, and the detection device 48 is fixed to the upper mounting part 40 by the oil pressure larger than the atmospheric pressure pressing the main body part 48b of the detection device 48 against the upper surface of the positioning hole 40e of the upper mounting part 40. As a result, when the detection device 48 is fixed to the upper mounting part 40, assembly work such as screwing is not necessary to fix the detection device 48 to the upper mounting part 40. Consequently, the assembly workability can be improved.

The rear suspension 39 is also constructed such that the oil pressure inside the rear suspension 39 is larger than the atmospheric pressure outside the rear suspension 39 by the free piston part 53 being pressed by high-pressure nitrogen gas and keeping the oil charged inside the rear suspension 39 at a high pressure. Consequently, it is possible to prevent the oil pressure inside the rear suspension 39 from becoming negative relative to the atmospheric pressure outside the rear suspension 39 when the rear suspension 39 moves relatively in the expanding direction and the oil pressure inside the rear suspension 39 is decreased. As a result, it is possible to prevent the detection device 48 from falling off the upper mounting part 40.

### Second embodiment

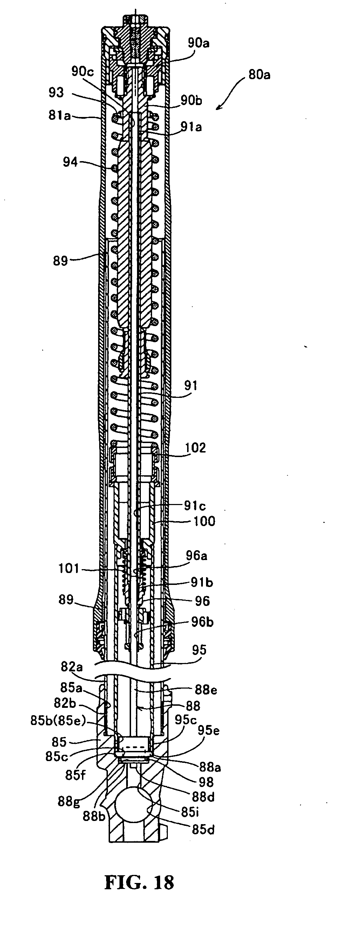

FIG. 18 is a cross-sectional view for explaining in detail the structure of a front fork of a motorcycle according to a second embodiment. In the second embodiment, unlike the first embodiment above, description will be made of an example in which a groove 88g is formed on a main body part 88b of a detection device 88 and the main body part 88b is inserted into a positioning hole 85c of an axle bracket 85 with an O-ring 98 disposed in the groove 88g when the detection device 88 is mounted to the axle bracket 85 of a right front fork 80a.

In the right front fork 80a of the motorcycle according to the second embodiment, as shown in FIG. 18, a bushing 89 that slides on the outer circumferential surface of an inner tube 82a is mounted on the inner circumferential surface of an outer tube 81a of the right front fork 80a. In addition, rod fixing members 90a and 90b are provided at the upper end of the outer tube 81a of the right front fork 80a to close the upper end opening of the outer tube 81a. The right front fork 80a is an example of a "first damping mechanism" of the present invention.

A rod part 91 is mounted to the rod fixing member 90b. A screw hole 90c is formed in the lower part of the rod fixing member 90b. In addition, an upper end outer circumference 91a, on which screw threads are formed, is formed at the upper end of the rod part 91. As the upper end outer circumference 91a of the rod part 91 is screwed into a screw hole 90c of the rod fixing member 90b, the rod part 91 is fixed to the rod fixing member 90b. The rod part 91 is constructed with a non-magnetic material such as aluminum and brass, and formed in the shape of a cylinder. An upper collar part 93 is mounted on the outer circumferential surface of the rod fixing member 90b and the upper end of a compression coil spring 94 is disposed against the upper collar part 93. A lower end outer circumference 91b, on which screw threads are formed, of the rod part 91 is fixed to a screw hole 96a of a piston part 96 for damping expansion disposed in a cylinder part 95. Insertion holes 91c and 96b are formed in the inner circumferential surface of the rod part 91 and in the inner circumferential surface of the piston part 96 constructed with a non-magnetic material, respectively. The insertion holes 91c and 96b are examples of a "sensor insertion hole" of the present invention. The insertion hole 96b of the piston part 96 is formed such that the central axis of the insertion hole 96b of the piston part 96 is generally coaxial with the central axis of the insertion hole 91c of the rod part 91. The insertion holes 91c and 96b are each constructed such that a sensor part 88e of the detection device 88 can be inserted. The detection device 88 is an example of a "detection member" of the present invention and the piston part 96 is an example of a "first damping mechanism" of the present invention.

A lower end outer circumference 82b, on which screw threads are formed, of the inner tube 82a of the right front fork 80a is fixed to a screw hole 85a of the axle bracket 85. The axle bracket 85 is an example of a "bracket" of the present invention.

In the second embodiment, the axle bracket 85 includes the screw hole 85a in which the lower end outer circumference 82b of the inner tube 82a is mounted, an insertion hole 85b in which a flange part 88a of the detection device 88 is inserted, the positioning hole 85c in which the main body part 88b of the detection device 88 is inserted, and a through hole 85d.

The insertion hole 85b of the axle bracket 85 is formed below the screw hole 85a, and has a hole diameter smaller than the hole diameter of the screw hole 85a. The insertion hole 85b is configured such that the central axis of the insertion hole 85b is generally overlapped with the central axis of the screw hole 85a. A screw part 85e is formed on the inner circumferential surface of the insertion hole 85b. The screw part 85e is an example of a "first screw part" of the present invention. A bottom 85f extending in the direction perpendicular to the center line of the insertion hole 85b is formed below the insertion hole 85b. The bottom 85f is formed so as to support the surface of the flange part 88a of the detection device 88 inserted into the insertion hole 85b. The flange part 88a is formed in the shape of a disk, and provided to mount the detection device 88 to the inside of the right front fork 80a. The lower surface of the flange part 88a is an example of a "contact part" of the present invention. In other words, the flange part 88a constitutes the contact part of the detection device 88 according to the second embodiment, that is in contact with the inner end surface (bottom 85f) of the right front fork 80a as pushed thereto.

The positioning hole 85c is formed under the insertion hole 85b and has a hole diameter smaller than the hole diameter of the insertion hole 85b. The positioning hole 85c is configured such that the central axis of the positioning hole 85c is generally coaxial with the central axis of the screw hole 85a. The lower part of the main body part 88b provided at the upper part and the lower part of the flange part 88a of the detection device 88 is inserted into the positioning hole 85c. The outer diameter of the outer circumferential surface of the main body part 88b is constructed so as to have generally the same dimension as the hole diameter of the positioning hole 85c. The groove 88g in the shape of a circle is formed in the outer circumferential surface of the lower part of the main body part 88b. An O-ring 98 is disposed in the groove 88g. As a result, it is possible to seal the space between the outer circumferential surface of the main body part 88b and the inner circumferential surface of the positioning hole 85c with the O-ring 98. Consequently, it is possible to prevent oil existing over the O-ring 98 from flowing out of the right front fork 80a through the main body part 88b. The groove 88g is an example of a "recess" of the present invention and the O-ring 98 is an example of a "sealing member" of the present invention. A wiring hole 85i for placing a wiring part 88d of the detection device 88 is provided at the lower part of the positioning hole 85c.

The cylinder part 95 is fixed to the insertion hole 85b. Specifically, a screw part 95c is formed in the outer circumferential surface in the lower part of the cylinder part 95. The screw part 95c is screwed into the screw part 85e on the inner circumferential surface of the insertion hole 85b. The cylinder part 95 is an example of a "first cylinder part" of the present invention and the screw part 95c is an example of a "second screw part" of the present invention. In addition, the flange part 88a of the detection device 88 is disposed between the bottom 85f of the insertion hole 85b of the axle bracket 85 and a lower end 95e of the cylinder part 95. The flange part 88a of the detection device 88 is interposed with the surface of the flange part 88a pressed against the bottom 85f of the insertion hole 85b by the lower end 95e of the cylinder part 95. As a result, it is possible to firmly mount the detection device 88 to the axle bracket 85. The lower end 95e is an example of a "one end" of the present invention.

An upper lid body 100 is fixed on top of the cylinder part 95. A return spring unit 101 is disposed between the lower part of the upper lidbody 100 and the pistonpart 96. In addition, a lower collar part 102 is provided over the upper lid body 30. A compression coil spring 94 is disposed between the upper surface of the lower collar part 102 and the lower surface of the upper collar part 93. The compression coil spring 94 has a function of damping impact when the outer tube 81a and the inner tube 82a of the right front fork 80a are contracted.

Other structures and operations of the second embodiment are the same as those of the first embodiment described above.

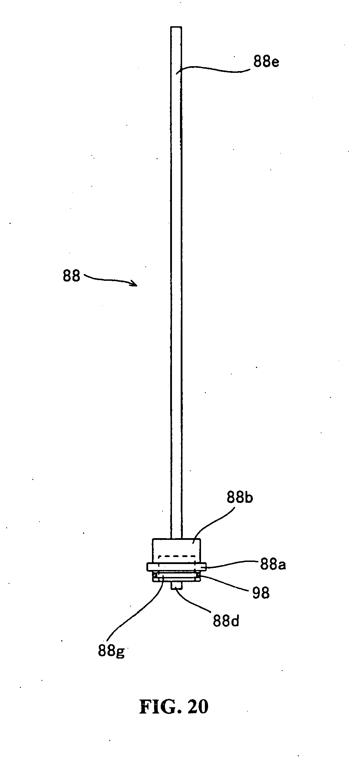

FIG. 20 to FIG. 22 are views for explaining the assembly process of the right front fork of the motorcycle according to the second embodiment. With reference to FIG. 18 and FIG. 20 to FIG. 22, the assembly process of the right front fork 80a of the motorcycle according to the second embodiment will be described hereinafter.

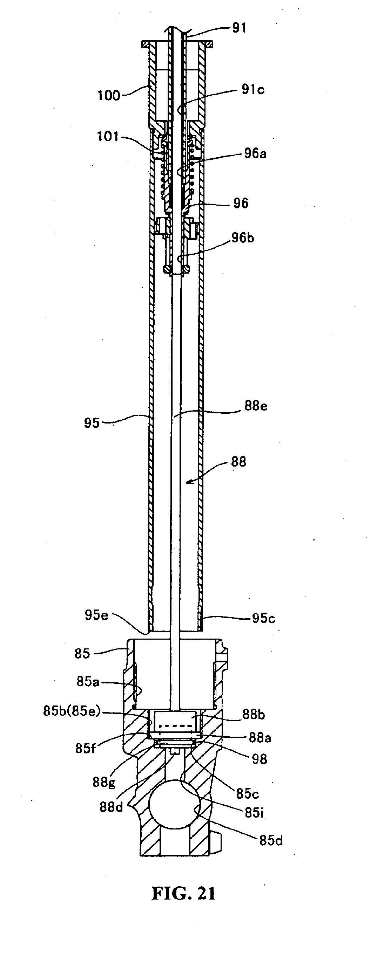

As shown in FIG. 20, the O-ring 98 is disposed in the groove 88g of the main body part 88b of the detection device 88. As shown in FIG. 21, with the O-ring 98 disposed in the groove 88g, the main body part 88b is inserted into the positioning hole 85c of the axle bracket 85. The surface of flange part 88a is brought into contact with the bottom 85f of the insertion hole 85b. After this, with the piston part 96 disposed in the cylinder part 95, the sensor part 18e is inserted from the insertion hole 96b of the piston part 96 into the insertion hole 91c of the rod part 91 and the insertion hole 96b of the piston part 96 made of a non-magnetic material.

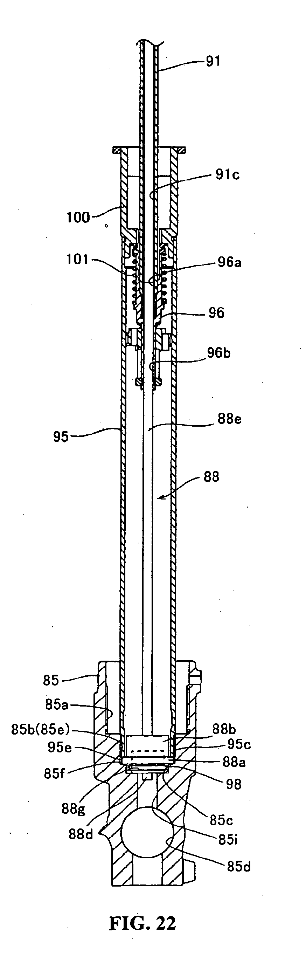

As shown in FIG. 22, the screw part 95c of the cylinder part 95 is screwed into the screw part 85e on the inner circumferential surface of the insertion hole 85b. At this time, as the surface of the flange part 88a of the detection device 88 is interposed between the lower end 95e of the cylinder part 95 and the bottom 85f of the insertion hole 85b, the detection device 88 is firmly fixed to the axle bracket 85.

As shown in FIG. 18, the lower end outer circumference 82b of the inner tube 82a is screwed into the screw hole 85a of the axle bracket 85, and the outer tube 81a is disposed outside the inner tube 82a. After this, the compression coil spring 94 is disposed around the rod part 91, and the upper collar part 93 is provided to the rod fixing member 90b, so that the compression coil spring 94 is mounted between the lower surface of the upper collar part 93 and the upper surface of the upper lid body 100 of the cylinder part 95. The upper end outer circumference 91a, on which screw thread are formed, of the rod part 91 is fixed to the screw hole 90c of the rod fixing member 90b. After this, the rod fixing member 90a is fixed at the upper end of the outer tube 81a. In this way, assembly of the right front fork 80a is completed.

In the second embodiment, as mentioned above, by providing the O-ring 98 for preventing oil in the right front fork 80a from flowing out through the main body part 88b of the detection device 88, it is possible to easily seal the space between the positioning hole 85c of the axle bracket 85 of the right front fork 80a and the groove 88g of the main body part 88b of the detection device 88 is easily sealed, and to prevent the oil in the right front fork 80a from flowing out.

In the second embodiment, by forming the groove 88g in the shape of a circle in which the O-ring 98 is disposed in the outer circumferential surface of the main body part 88b of the detection device 88, it is possible to prevent the O-ring 98 from moving on the outer circumferential surface of the main body part 88b of the detection device 88, and thus to prevent the detection device 88 from deviating from the main body part 88b.

The embodiments disclosed herein are examples in every respect and should not be considered as limitations. The scope of the present invention is not defined by the descriptions of the embodiments above but defined by Claims, and includes all modifications that are equivalent in meaning and scope to the Claims.

For instance, in the embodiments above, a motorcycle is described as an example of the vehicle including the suspension system and the detection member. However, the present invention is not limited thereto, and can be applied to other vehicles such as a bicycle, a tricycle, and an ATV (all terrain vehicle) as long as it includes a suspension system and a detection member.

In the embodiments above, the O-ring (sealing member) is provided between the detection member and the right front fork and the rear suspension. However, the present invention is not limited thereto. It is not necessary to provide the O-ring (sealing member) between the detection member and the right front fork and the rear suspension.

In the embodiments above, the sensor part is disposed in the pipe member made of a non-magnetic material to detect the length inserted into the insertion hole of the pipe member made of a non-magnetic material, so that the amount of expansion or contraction of the suspension system is detected based on the detected length, and that the speed of expansion or contraction is calculated by differentiating the amount of expansion or contraction with respect to time. However, the present invention is not limited thereto. It is possible to detect a speed of expansion or contraction of the suspension system by detecting the relative speed of the rod part or the like using a sensor part for detecting speed.

In the embodiments above, the present invention is applied to the front fork and the rear suspension as examples of a suspension system having a damping mechanism. However, the present invention is not limited thereto, and may be applied to a suspension system having a damping mechanism other than the front fork or the rear suspension.

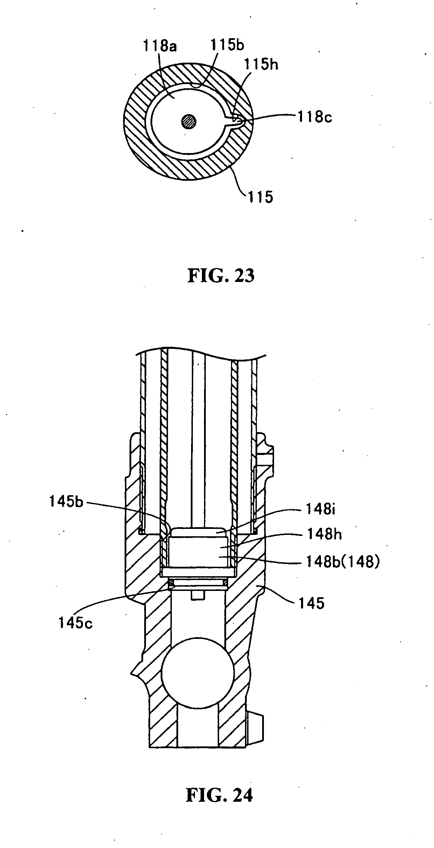

In the first embodiment above, the pin holes are formed in each of the flange part and the bottom of the insertion hole, and the pin is fitted into each pin hole, to prevent the flange part from rotating relative to the insertion hole of the axle bracket. However, the present invention is not limited thereto. As shown in FIG. 23, it is possible to prevent a flange part 118a from rotating relative to an insertion hole 115b of an axle bracket 115 by providing a projection 118c on the outer circumferential surface of the flange part 118a and providing a recess 115h in the inner circumferential surface of the insertion hole 115b, and engaging the projection 118c and the recess 115h. The axle bracket 115 is an example of a "bracket" of the present invention.

In the second embodiment above, the upper part of the main body part of the detection member is formed in the shape of an angulated cylinder. However, the present invention is not limited thereto. As shown in FIG. 24, it is possible to use a detection device 148 in which the upper part of a main body part 148b is formed with an angulated cylindrical part 148h and a chamfered cylindrical part 148i formed on the upper part of the cylindrical part 148h. An insertion hole 145b of an axle bracket 145 according to this modified example has a diameter of about 25 millimeters, and a positioning hole 145c has a diameter of about 22 millimeters.

### Description of Reference Numerals and Symbols

- 1:: motorcycle (vehicle)
- 2:: head pipe (vehicle body)
- 3:: main frame (vehicle body)
- 4:: seat rail (vehicle body)
- 8:: front wheel (wheel)
- 10a, 80a:: right front fork (first suspension system, other front fork)
- 10b:: left front fork (second suspension system, one front fork)
- 15, 85, 145:: axle bracket (bracket)
- 15b, 85b, 145b:: insertion hole
- 15c, 40e, 85c, 145c:: positioning hole
- 15e, 85e:: screw part (first screw part)
- 15f, 85f:: bottom
- 15h:: pin hole (second pin hole)
- 17:: damping mechanism (first damping mechanism)
- 18,: 48, 88, 148: detection device (detection member)
- 18a,: 88a: flange part (contact part)
- 18b, 48b, 88b, 148b:: main body part
- 18c:: pin hole (first pin hole)
- 18e, 48e, 88e:: sensor part
- 21c, 26b, 47a, 65a, 91c, 96b:: insertion hole (sensor insertion hole)
- 25, 46, 95:: cylinder part (first cylinder part)
- 25c, 95c:: screw part (second screw part)
- 25e, 95e:: lower end (one end)
- 26, 96:: piston part (first damping mechanism)
- 28, 67, 98:: O-ring (sealing member)
- 29:: pin
- 38:: rear wheel (wheel)
- 39:: rear suspension (first suspension system)
- 40:: upper mounting part (bracket)
- 47b:: end
- 48a:: flange part
- 48b:: main body part (contact part)
- 48g,: 88g: groove (recess)
- 49:: reservoir tank (second cylinder part)
- 51:: contraction side damping mechanism (first damping mechanism)
- 52:: expansion side damping mechanism (first damping mechanism)
- 53:: free piston part
- 61:: piston part (first damping mechanism)
- 65b:: end
- 70:: damping force adjustment valve (second damping mechanism)

## Claims

1. A vehicle (1) comprising:
a wheel (8, 38);
a vehicle body (2, 3, 4);
a first suspension system (10a, 39) provided between the wheel (8, 38) and the vehicle body (2, 3, 4), wherein the first suspension system (10a, 39) comprises:
a first damping mechanism (17, 52) disposed in the first suspension system (10a, 39) to damp a force in at least either one of an expanding direction and a contracting direction when the wheel (8, 38) and the vehicle body (2, 3, 4) move relatively;
a first cylinder part (25, 46) coupled to either one of the wheel (8, 38) and the vehicle body (2, 3, 4);
a bracket (15, 40) provided to cover an opening on one side of the first cylinder part (25, 46); and
a detection member (18, 48) disposed in the first suspension system (10a, 39) to detect a state of expansion or contraction when the wheel (8, 38) and the vehicle body (2, 3, 4) move relatively, wherein the detection member (18, 48) includes a contact part (18a, 48b),
**characterized in that** the contact part (18a, 48b) of the detection member (18, 48) is inserted within a hole (15b, 40e) formed in the bracket (15, 40) by being pressed therein from inside the first suspension system (10a, 39) such that the contact part (18a, 48b) is in contact with an inner end surface of the first suspension system (10a, 39) with its end pressed thereagainst.

2. The vehicle (1) according to claim 1, wherein the detection member (18, 48) includes a sensor part (18e, 48e), a main body part (18b, 48b) connected to the sensor part (18e, 48e), and a flange part (18a, 48a) coupled to the main body part (18b, 48b).

3. The vehicle (1) according to claim 2, wherein the bracket (15) comprises an insertion hole (15b) into which the flange part (18a) of the detection member (18) is inserted, wherein the insertion hole (15b) has a bottom (15f) for supporting a lower surface of the flange part (18a).

4. The vehicle (1) according to claim 2 or 3, wherein the bracket (15, 40) comprises a positioning hole (15c, 40e) into which the main body part (18b, 48b) of the detection member (18, 48) is inserted.

5. The vehicle (1) according to any preceding claim, further comprising a sealing member (28, 67) disposed between an inner surface of the first suspension system (10a, 39) and the detection member (18).

6. The vehicle (1) according to claim 5 when dependent on claim 3, wherein the sealing member (28) is disposed between the lower surface of the flange part (18a) of the detecting member (18) and the bottom (15f) of the insertion hole (15b) of the bracket (15).

7. The vehicle (1) according to claim 5 when dependent on claim 4, wherein the sealing member (67) is disposed between an outer circumferential surface of the main body part (48b) of the detection member (48) and an inner circumferential surface of the positioning hole (40e) of the bracket (40).

8. The vehicle (1) according to any preceding claim, further comprising:
a first pin hole (18c) formed within the detection member (18);
a second pin hole (15h) formed within the bracket (15); and
a pin (29) adapted to be fitted into the first and second pin holes (18c, 15h) to prevent the detection member (18) from rotating relative to the first suspension system (10a).

9. The vehicle (1) according to claim 7, wherein the outer circumferential surface of the main body part (48b) of the detection member (48) is formed with a recess (48g) in which the sealing member (67) is disposed.

10. The vehicle (1) according to any one of claims 5 to 9 when dependent on claim 2, wherein the first suspension system (39) is constructed such that a first pressure inside the first suspension system (39) with respect to the sealing member (67) is larger than a second pressure outside the first suspension system (39) with respect to the sealing member (67), and the detection member (48) is constructed so as to be fixed to the bracket (40) by the main body part (48b) of the detection member (48) being pressed against a part of the bracket (40) by the first pressure larger than the second pressure.

11. The vehicle (1) according to any preceding claim, wherein the first suspension system (39) further includes a second cylinder part (49) filled with high pressure gas and a free piston part (53) disposed in the second cylinder part (49), and the first suspension system (39) is constructed such that a first pressure inside the first suspension system (39) is made larger than a second pressure outside the first suspension system (39) by the free piston part (53) being pressed by the high pressure gas and bringing oil charged in the first suspension system (39) to a high pressure state.

12. The vehicle (1) according to any one of claims 2 to 11, wherein the contact part is formed in at least one of the main body part (48b) and the flange part (18a).

13. The vehicle (1) according to any one of claims 3 to 12, wherein the detection member (18) is fixed to the bracket (15) by interposing the flange part (18a) between the bottom (15f) of the insertion hole (15b) of the bracket (15) and one end (25e) of the first cylinder part (25).

14. The vehicle (1) according to claim 13, wherein:
the insertion hole (15b) of the bracket (15) includes a first screw part (15e) formed on an inner circumferential surface;
the first cylinder part (25) includes a second screw part (25c) formed on an outer circumferential surface of the one end (25e) of the first cylinder part (25); and
the one end (25e) of the first cylinder part (25) is in contact with an upper surface of the flange part (18a) of the detection member (18) with the second screw part (25c) of the first cylinder part (25) screwed into the first screw part (15e) of the insertion hole (15b) of the bracket (15).

15. The vehicle (1) according to any preceding claim 2 to 14, wherein the first damping mechanism (17) is provided in the first cylinder part (25), and constructed so as to damp a force when the wheel (8) and the vehicle body (2, 3, 4) move relatively in the expanding direction.

16. The vehicle (1) according to any preceding claim, wherein the detection member (48) includes a sensor part (48e),
the first damping mechanism (52) includes a sensor insertion hole (65a) into which the sensor part (48e) of the detection member (48) is inserted, and an end (65b) of the sensor insertion hole (65a) on a side where the sensor part (48e) is inserted has a tapering shape having a larger opening area toward outside.

17. The vehicle (1) according to any preceding claim, further comprising:
a second suspension system (10b) constituting a second front fork,
wherein the wheel (8) includes a front wheel, and the first suspension system (10a) defines a first front fork provided between the front wheel (8) and the vehicle body (2, 3, 4),
and wherein the first front fork (10a) is provided with both of the first damping mechanism (17) and the detection member (18), and the second front fork (10b) is provided with a second damping mechanism (70).

18. The vehicle (1) according to any preceding claim, wherein the wheel includes a rear wheel (38) and the first suspension system (39) includes a rear suspension disposed between the rear wheel (38) and the vehicle body (2, 3, 4) and provided with the first damping mechanism (52) and the detection member (48).

19. The vehicle (1) according to any preceding claim, wherein the contact part (18a, 48b) is pressed within the hole (15b, 40e) in the bracket (15, 40) by at least one of the first cylinder part (25) and pressure within the suspension system (39).

## Patentansprüche

1. Fahrzeug (1), das Folgendes umfasst:
ein Rad (8, 3 8),
einen Fahrzeugaufbau (2, 3, 4),
ein erstes Aufhängungssystem (10a, 39), das zwischen dem Rad (8, 38) und dem Fahrzeugaufbau (2, 3, 4) bereitgestellt wird, wobei das erste Aufhängungssystem (10a, 39) Folgendes umfasst:
einen ersten Dämpfungsmechanismus (17, 52), der in dem ersten Aufhängungssystem (10a, 39) angeordnet ist, um eine Kraft in wenigstens einer Auszugsrichtung oder einer Einzugsrichtung zu dämpfen, wenn sich das Rad (8, 38) und der Fahrzeugaufbau (2, 3, 4) im Verhältnis bewegen,
einen ersten Zylinderteil (25, 46), der entweder an das Rad (8, 38) oder an den Fahrzeugaufbau (2, 3, 4) gekoppelt ist,
eine Stütze (15, 40), die dafür bereitgestellt wird, eine Öffnung auf einer Seite des ersten Zylinderteils (25, 46) abzudecken, und
ein Erfassungselement (18, 48), das in dem ersten Aufhängungssystem (10a, 39) angeordnet ist, um einen Auszugs- oder Einzugszustand zu erfassen, wenn sich das Rad (8, 38) und der Fahrzeugaufbau (2, 3, 4) verhältnismäßig bewegen, wobei das Erfassungselement (18, 48) einen Kontaktteil (18a, 48b) umfasst,
**dadurch gekennzeichnet, dass** der Kontaktteil (18a, 48b) des Erfassungselements (18, 48) in ein Loch (15b, 40e), das in der Stütze (15, 40) geformt ist, eingesetzt wird, dadurch, dass er von innerhalb des ersten Aufhängungssystems (10a, 39) in dasselbe gepresst wird derart, dass der Kontaktteil (18a, 48b) in Kontakt mit einer inneren Endfläche des ersten Aufhängungssystems (10a, 39) ist, wobei sein Ende gegen dieselbe gepresst wird.

2. Fahrzeug (1) nach Anspruch 1, wobei das Erfassungselement (18, 48) einen Sensorteil (18e, 48e), einen Hauptkörperteil (18b, 48b), der mit dem Sensorteil (18e, 48e) verbunden ist, und einen an den Hauptkörperteil (18b, 48b) gekoppelten Flanschteil (18a, 48a) einschließt.

3. Fahrzeug (1) nach Anspruch 2, wobei die Stütze (15) ein Einsetzloch (15b) umfasst, in das der Flanschteil (18a) des Erfassungselements (18) eingesetzt wird, wobei das Einsetzloch (15b) einen Boden (15f) zum Tragen einer unteren Fläche des Flanschteils (18a) hat.

4. Fahrzeug (1) nach Anspruch 2 oder 3, wobei die Stütze (15, 40) ein Positionierungsloch (15c, 40e) umfasst, in das der Hauptkörperteil (18b, 48b) des Erfassungselements (18, 48) eingesetzt wird.

5. Fahrzeug (1) nach einem der vorhergehenden Ansprüche, das ferner ein Abdichtungselement (28, 67) umfasst, das zwischen einer Innenfläche des ersten Aufhängungssystems (10a, 39) und dem Erfassungselement (18) angeordnet ist.

6. Fahrzeug (1) nach Anspruch 5, soweit abhängig von Anspruch 3, wobei das Abdichtungselement (28) zwischen der unteren Fläche des Flanschteils (18a) des Erfassungselements (18) und dem Boden (15f) des Einsetzlochs (15b) der Stütze (15) angeordnet ist.

7. Fahrzeug (1) nach Anspruch 5, soweit abhängig von Anspruch 4, wobei das Abdichtungselement (67) zwischen einer Außenumfangsfläche des Hauptkörperteils (48b) des Erfassungselements (48) und einer Innenumfangsfläche des Positionierungslochs (40e) der Stütze (40) angeordnet ist.

8. Fahrzeug (1) nach einem der vorhergehenden Ansprüche, das ferner Folgendes umfasst:
ein erstes Stiftloch (18c), das innerhalb des Erfassungselements (18) geformt ist,
ein zweites Stiftloch (15h), das innerhalb der Stütze (15) geformt ist, und
einen Stift (29), der dafür eingerichtet ist, in das erste und das zweite Stiftloch (18c, 15h) gepasst zu werden, um zu verhindern, dass sich das Erfassungselement (18) im Verhältnis zu dem ersten Aufhängungssystem (10a) dreht.

9. Fahrzeug (1) nach Anspruch 7, wobei die Außenumfangsfläche des Hauptkörperteils (48b) des Erfassungselements (48) mit einer Aussparung (48g) geformt ist, in der das Abdichtungselement (67) angeordnet ist.

10. Fahrzeug (1) nach einem der Ansprüche 5 bis 9, soweit abhängig von Anspruch 2, wobei das erste Aufhängungssystem (39) derart aufgebaut ist, dass ein erster Druck innerhalb des ersten Aufhängungssystems (39) in Bezug auf das Abdichtungselement (67) größer ist als ein zweiter Druck außerhalb des ersten Aufhängungssystems (39) in Bezug auf das Abdichtungselement (67), und das Erfassungselement (48) so aufgebaut ist, dass es dadurch an der Stütze (40) zu befestigen ist, dass der Hauptkörperteil (48b) des Erfassungselements (48) durch den ersten Druck, der größer ist als der zweite Druck, gegen einen Teil der Stütze (40) gepresst wird.

11. Fahrzeug (1) nach einem der vorhergehenden Ansprüche, wobei das erste Aufhängungssystem (39) ferner einen zweiten Zylinderteil (49), der mit Hochdruckgas gefüllt ist, und einem freien Kolbenteil (53), der in dem zweiten Zylinderteil (49) angeordnet ist, einschließt und das erste Aufhängungssystem (39) derart aufgebaut ist, dass ein erster Druck innerhalb des ersten Aufhängungssystems (39) größer gemacht wird als ein zweiter Druck außerhalb des ersten Aufhängungssystems (39) dadurch, dass der freie Kolbenteil (53) durch das Hochdruckgas gepresst wird und in das erste Aufhängungssystem (39) gefülltes Öl zu einem Hochdruckzustand bringt.

12. Fahrzeug (1) nach einem der Ansprüche 2 bis 11, wobei der Kontaktteil in wenigstens dem Hauptkörperteil (48b) und/oder dem Flanschteil (18a) geformt ist.

13. Fahrzeug (1) nach einem der Ansprüche 3 bis 12, wobei das Erfassungselement (18) dadurch an der Stütze (15) befestigt ist, dass der Flanschteil (18a) zwischen den Boden (15f) des Einsetzlochs (15b) der Stütze (15) und ein Ende (25e) des ersten Zylinderteils (25) eingefügt wird.

14. Fahrzeug (1) nach Anspruch 13, wobei:
das Einsetzloch (15b) der Stütze (15) einen ersten Schraubenteil (15e) umfasst, der auf einer Innenumfangsfläche geformt ist,
der erste Zylinderteil (25) einen zweiten Schraubenteil (25c) umfasst, der auf einer Außenumfangsfläche des einen Endes (25e) des ersten Zylinderteils (25) geformt ist, und
das eine Ende (25e) des ersten Zylinderteils (25) in Kontakt mit einer oberen Fläche des Flanschteils (18a) des Erfassungselements (18) ist, wobei der zweite Schraubenteil (25c) des ersten Zylinderteils (25) in den ersten Schraubenteil (15e) des Einsetzlochs (15b) der Stütze (15) geschraubt ist.

15. Fahrzeug (1) nach einem der vorhergehenden Ansprüche 2 bis 14, wobei der erste Dämpfungsmechanismus (17) in dem ersten Zylinderteil (25) bereitgestellt wird und so aufgebaut ist, dass er eine Kraft dämpft, wenn sich das Rad (8) und der Fahrzeugaufbau (2, 3, 4) in der Auszugsrichtung verhältnismäßig bewegen.

16. Fahrzeug (1) nach einem der vorhergehenden Ansprüche, wobei das Erfassungselement (48) einen Sensorteil (48e) einschließt,
wobei der erste Dämpfungsmechanismus (52) ein Sensoreinsetzloch (65a) umfasst, in das der Sensorteil (48e) des Erfassungselements (48) eingesetzt wird, und ein Ende (65b) des Sensoreinsetzlochs (65a) auf einer Seite, wo der Sensorteil (48e) eingesetzt wird, eine sich verjüngende Form hat, die nach außen hin eine größere Öffnungsfläche hat.

17. Fahrzeug (1) nach einem der vorhergehenden Ansprüche, das ferner Folgendes umfasst:
ein zweites Aufhängungssystem (10b), das eine zweite Vorderradgabel darstellt,
wobei das Rad (8) ein Vorderrad einschließt und das erste Aufhängungssystem (10a) eine erste Vorderradgabel definiert, die zwischen dem Vorderrad (8) und dem Fahrzeugaufbau (2, 3, 4) bereitgestellt wird,
und wobei die erste Vorderradgabel (10a) sowohl mit dem ersten Dämpfungsmechanismus (17) als auch mit dem Erfassungselement (18) versehen ist und die zweite Vorderradgabel (10b) mit dem zweiten Dämpfungsmechanismus (70) versehen ist.

18. Fahrzeug (1) nach einem der vorhergehenden Ansprüche, wobei das Rad ein Hinterrad (38) einschließt und das erste Aufhängungssystem (39) eine hintere Aufhängung einschließt, die zwischen dem Hinterrad (38) und dem Fahrzeugaufbau (2, 3, 4) angeordnet und mit dem ersten Dämpfungsmechanismus (52) und dem Erfassungselement (48) versehen ist.

19. Fahrzeug (1) nach einem der vorhergehenden Ansprüche, wobei der Kontaktteil (18a, 48b) durch wenigstens den ersten Zylinderteil (25) und/oder den Druck innerhalb des Aufhängungssystems (39) in das Loch (15b, 40e) in der Stütze (15, 40) gepresst wird.

## Revendications

1. Véhicule (1), comprenant :
une roue (8, 38) ;
une carrosserie du véhicule (2, 3, 4);
un premier système de suspension (10a, 39), agencé entre la roue (8, 38) et la carrosserie du véhicule (2, 3, 4), le premier système de suspension (10a, 39) comprenant :
un premier mécanisme d'amortissement (17, 52), agencé dans le premier système de suspension (10a, 39), pour amortir une force dans au moins une direction de dilatation ou une direction de contraction lors d'un déplacement relatif de la roue (8, 39) et de la carrosserie du véhicule (2, 3, 4) ;
une première partie de cylindre (25, 46), accouplée à la roue (8, 38) ou à la carrosserie du véhicule (2, 3, 4) ;
une console (15, 40), destinée à recouvrir une ouverture sur un côté de la première partie de cylindre (25, 46) ; et
un élément de détection (18, 48), agencé dans le premier système de suspension (10a, 39), pour détecter un état de dilatation ou de contraction lors d'un déplacement relatif de la roue (8, 38) et de la carrosserie du véhicule (2, 3, 4) ; dans lequel l'élément de détection (18, 48) englobe une partie de contact (18a, 48b),
**caractérisé en ce que** la partie de contact (18a, 48b) de l'élément de détection (18, 48) est insérée dans un trou (15b, 40e) formé dans la console (15, 40), par pression dans celle-ci à partir de l'intérieur du premier système de suspension (10a, 39), de sorte que la partie de contact (18a, 48b) est en contact avec une surface d'extrémité interne du premier système de suspension (10a, 39), son extrémité étant pressée contre celle-ci.

2. Véhicule (1) selon la revendication 1, dans lequel l'élément de détection (18, 48) englobe une partie de capteur (18e, 48e), une partie de corps principal (18b, 48b) connectée à la partie de capteur (18e, 48e), et une partie de bride (18a, 48a), accouplée à la partie de corps principal (18b, 48b).

3. Véhicule (1) selon la revendication 2, dans lequel la console (15) comprend un trou d'insertion (15b), dans lequel est insérée la partie de bride (18a) de l'élément de détection (18), le trou d'insertion (15b) comportant un fond (15f) pour supporter une surface inférieure de la partie de bride (18a).

4. Véhicule (1) selon les revendications 2 ou 3, dans lequel la console (15, 40) comprend un trou de positionnement (15c, 40e) dans lequel est insérée la partie de corps principal (18b, 48b) de l'élément de détection (18, 48).

5. Véhicule (1) selon l'une quelconque des revendications précédentes, comprenant en outre un élément d'étanchéité (28, 67), agencé entre une surface interne du premier système de suspension (10a, 39) et l'élément de détection (18).

6. Véhicule (1) selon la revendication 5, dépendant de la revendication 3, dans lequel l'élément d'étanchéité (28) est agencé entre la surface inférieure de la partie de bride (18a) de l'élément de détection (18) et le fond (15f) du trou d'insertion (15b) de la console (15).

7. Véhicule (1) selon la revendication 5, dépendant de la revendication 4, dans lequel l'élément d'étanchéité (67) est agencé entre une surface circonférentielle externe de la partie de corps principale (48b) de l'élément de détection (48) et une surface circonférentielle interne du trou de positionnement (40e) de la console (40).

8. Véhicule (1) selon l'une quelconque des revendications précédentes, comprenant en outre :
un premier trou de cheville (18c), formé dans l'élément de détection (18) ;
un deuxième trou de cheville (15h), formé dans la console (15) ; et
une cheville (29), adaptée pour être ajustée dans les premier et deuxième trous de cheville (18c, 15h), pour empêcher une rotation de l'élément de détection (18) par rapport au premier système de suspension (10a).

9. Véhicule (1) selon la revendication 7, dans lequel la surface circonférentielle externe de la partie de corps principal (48b) de l'élément de détection (48) comporte un évidement (48g) dans lequel est agencé l'élément d'étanchéité (67).

10. Véhicule (1) selon l'une quelconque des revendications 5 à 9, dépendant de la revendication 2, dans lequel le premier système de suspension (39) est construit de sorte qu'une première pression à l'intérieur du premier système de suspension (39) par rapport à l'élément d'étanchéité (67) est supérieure à une deuxième pression à l'extérieur du premier système de suspension (39) par rapport à l'élément d'étanchéité (67), l'élément de détection (48) étant construit de sorte à être fixé sur la console (40) par la partie de corps principal (48b) de l'élément de détection (48), pressée contre une partie de la console (40) par la première pression supérieure à la deuxième pression.

11. Véhicule (1) selon l'une quelconque des revendications précédentes, dans lequel le premier système de suspension (39) englobe en outre une deuxième partie de cylindre (49) remplie de gaz haute pression, et une partie de piston libre (53) agencée dans la deuxième partie de cylindre (49), le premier système de suspension (39) étant construit de sorte qu'une première pression à l'intérieur du premier système de suspension (39) est accrue par rapport à une deuxième pression à l'extérieur du premier système de suspension (39) par suite de la pression de la partie de piston libre (53) par le gaz haute pression et de l'application d'un état haute pression à l'huile chargée dans le premier système de suspension (39).

12. Véhicule (1) selon l'une quelconque des revendications 2 à 11, dans lequel la partie de contact est formée dans au moins une partie, la partie de corps principale (48b) ou la partie de bride (18a).

13. Véhicule (1) selon l'une quelconque des revendications 3 à 12, dans lequel l'élément de détection (18) est fixé sur la console (15) en agençant la partie de bride (18a) entre le fond (15f) du trou d'insertion (15b) de la console (15) et une extrémité (25e) de la première partie de cylindre (25).

14. Véhicule (1) selon la revendication 13, dans lequel :
le trou d'insertion (15b) de la console (15) englobe une première partie de vis (15e), formée sur une surface circonférentielle interne ;
la première partie de cylindre (25) englobe une deuxième partie de vis (25c), formée sur une surface circonférentielle externe de l'extrémité (25e) de la première partie de cylindre (25) ; et
ladite extrémité (25e) de la première partie de cylindre (25) est en contact avec une surface supérieure de la partie de bride (18a) de l'élément de détection (18), la deuxième partie de vis (25c) de la première partie de cylindre (25) étant vissée dans la première partie de vis (15e) du trou d'insertion (15b) de la console (15).

15. Véhicule (1) selon l'une quelconque des revendications 2 à 14, dans lequel le premier mécanisme d'amortissement (17) est fourni dans la première partie de cylindre (25), et est construit de sorte à amortir une force lors d'un déplacement relatif de la roue (8) et de la carrosserie du véhicule (2, 3, 4) dans la direction de dilatation.

16. Véhicule (1) selon l'une quelconque des revendications précédentes, dans lequel l'élément de détection (48) englobe une partie de capteur (48e) ;
le premier mécanisme d'amortissement (52) englobant un trou d'insertion du capteur (65a), dans lequel est insérée la partie de capteur (48e) de l'élément de détection (48), une extrémité (65b) du trou d'insertion du capteur (65a), sur un côté d'insertion de la partie de capteur (48e), ayant une forme effilée avec une surface d'ouverture plus grande vers l'extérieur.

17. Véhicule (1) selon l'une quelconque des revendications précédentes, comprenant en outre :
un deuxième système de suspension (10b) constituant une deuxième fourche avant ;
la roue (8) englobant une roue avant, et le premier système de suspension (10a) définissant une première fourche avant agencée entre la roue avant (8) et la carrosserie du véhicule (2, 3, 4) ;
la première fourche avant (10a) comportant le premier mécanisme d'amortissement (17) et l'élément de détection (18), la deuxième fourche avant (10b) comportant un deuxième mécanisme d'amortissement (70).

18. Véhicule (1 selon l'une quelconque des revendications précédentes, dans lequel la roue englobe une roue arrière (38), le premier système de suspension (39) englobant une suspension arrière agencée entre la roue arrière (38) et la carrosserie du véhicule (2, 3, 4) et comportant le premier mécanisme d'amortissement (52) et l'élément de détection (48).

19. Véhicule (1) selon l'une quelconque des revendications précédentes, dans lequel la partie de contact (18a, 48b) est pressée dans le trou (15b, 40e) dans la console (15, 49) par au moins un élément, la première partie de cylindre (25) ou la pression dans le système de suspension (39).
